(19) Europäisches Patentamt
European Patent Office
Office européen des brevets

(11) **EP 3 534 154 A1**

(12) **EUROPEAN PATENT APPLICATION**

(43) Date of publication:
04.09.2019 Bulletin 2019/36

(51) Int Cl.:
*G01N 27/22* *(2006.01)*

(21) Application number: 18193403.5

(22) Date of filing: 10.09.2018

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 28.02.2018 JP 2018035682

(71) Applicant: **Kabushiki Kaisha Toshiba**
**Minato-ku**
**Tokyo 105-8001 (JP)**

(72) Inventor: **Yamazaki, Hiroaki**
**Tokyo (JP)**

(74) Representative: **Hoffmann Eitle**
**Patent- und Rechtsanwälte PartmbB**
**Arabellastraße 30**
**81925 München (DE)**

(54) **GAS SENSOR**

(57) According to one arrangement, a gas sensor is disclosed. The gas sensor includes a MEMS capacitor (101) including a first electrode (5a) and a movable structure (20) apart from the first electrode. The movable structure includes a deformable member (13) that deforms by absorbing or adsorbing a gas, a heater (11) to heat the deformable member, and a second electrode (9a). An interval between first and second electrodes changes in response to the deformation of the deformation member.

The sensor further includes a first temperature sensor (103) to detect a temperature of the heater, and a second temperature sensor (104) to detect a temperature of environment in which the MEMS capacitor is used. The sensor further includes a temperature control unit (105) to control a temperature of the heater based on the temperature detected by the first temperature sensor and the temperature detected by the second temperature sensor.

F I G. 1

## Description

FIELD

The present disclosure relates to a gas sensor.

BACKGROUND

Various gas sensors are proposed. A gas sensor of a type including built-in heaters is known as one of the gas sensors. The gas sensor of this type is expected to further improve performance.

BRIEF DESCRIPTION OF THE DRAWINGS

FIG. 1 is a schematic configuration diagram of a hydrogen sensor according to a first arrangement.
FIGS. 2A and 2B are schematic configuration diagrams of a heater-temperature sensor of the hydrogen sensor according to the first arrangement.
FIGS. 3A and 3B are schematic configuration diagrams of an environmental temperature sensor of the hydrogen sensor according to the first arrangement.
FIG. 4 is a schematic configuration diagram of a heater-temperature control unit of the hydrogen sensor according to the first arrangement.
FIG. 5 is a flowchart for explaining a method for controlling a heater temperature of the hydrogen sensor according to the first arrangement.
FIG. 6 is another schematic configuration diagram of the hydrogen sensor according to the first arrangement.
FIG. 7 is a cross-sectional view illustrating an example of a structure of a MEMS capacitor structure of the hydrogen sensor according to the first arrangement.
FIG. 8 is a plan view schematically illustrating part of a MEMS capacitor of the hydrogen sensor according to the first arrangement.
FIGS. 9A to 9E are cross-sectional views illustrating an example of an upper electrode and a structure below the upper electrode of the MEMS capacitor structure of the hydrogen sensor according to the first arrangement.
FIG. 10 is a cross-sectional view illustrating an anchor structure for connecting a heater in a hydrogen actuator of the hydrogen sensor to an external circuit according to the first arrangement.
FIG. 11 is a cross-sectional view for explaining a method for manufacturing the MEMS capacitor of the hydrogen sensor according to the first arrangement.
FIG. 12 is a cross-sectional view for explaining the method for manufacturing the MEMS capacitor of the hydrogen sensor according to the first arrangement subsequent to FIG. 11.
FIG. 13 is a cross-sectional view for explaining the method for manufacturing the MEMS capacitor of the hydrogen sensor according to the first arrangement subsequent to FIG. 12.
FIG. 14 is a cross-sectional view for explaining the method for manufacturing the MEMS capacitor of the hydrogen sensor according to the first arrangement subsequent to FIG. 13.
FIG. 15 is a cross-sectional view for explaining the method for manufacturing the MEMS capacitor of the hydrogen sensor according to the first arrangement subsequent to FIG. 14.
FIG. 16 is a cross-sectional view for explaining the method for manufacturing the MEMS capacitor of the hydrogen sensor according to the first arrangement subsequent to FIG. 15.
FIG. 17 is a cross-sectional view for explaining the method for manufacturing the MEMS capacitor of the hydrogen sensor according to the first arrangement subsequent to FIG. 16.
FIG. 18 is a cross-sectional view for explaining the method for manufacturing the MEMS capacitor of the hydrogen sensor according to the first arrangement subsequent to FIG. 17.
FIG. 19 is a cross-sectional view for explaining the method for manufacturing the MEMS capacitor of the hydrogen sensor according to the first arrangement subsequent to FIG. 18.
FIG. 20 is a cross-sectional view for explaining the method for manufacturing the MEMS capacitor of the hydrogen sensor according to the first arrangement subsequent to FIG. 19.
FIG. 21 is a cross-sectional view for explaining the method for manufacturing the MEMS capacitor of the hydrogen sensor according to the first arrangement subsequent to FIG. 20.
FIG. 22 is a cross-sectional view for explaining the method for manufacturing the MEMS capacitor of the hydrogen sensor according to the first arrangement subsequent to FIG. 21.
FIG. 23 is a cross-sectional view for explaining the method for manufacturing the MEMS capacitor of the hydrogen sensor according to the first arrangement subsequent to FIG. 22.
FIG. 24 is a cross-sectional view for explaining the method for manufacturing the MEMS capacitor of the hydrogen sensor according to the first arrangement subsequent to FIG. 23.
FIG. 25 is a cross-sectional view schematically illustrating a modified example of a lower cavity region of the MEMS capacitor of the hydrogen sensor according to the first arrangement.
FIG. 26 is a cross-sectional view schematically illustrating another modified example of a lower cavity region of the MEMS capacitor of the hydrogen sensor according to the first arrangement.
FIG. 27 is a cross-sectional view schematically illustrating still another modified example of a lower cavity region of the MEMS capacitor of the hydrogen sensor according to the first arrangement.
FIGS. 28A and 28B are plan views schematically illustrating the heater of the MEMS capacitor of the hydrogen sensor according to the first arrangement.
FIG. 29 is a cross-sectional view for explaining a hydrogen sensor according to a second arrangement.
FIG. 30 is a view illustrating an example of a detection circuit of a catalytic combustion type combustible gas sensor.
FIG. 31 is a cross-sectional view illustrating a multisensor including a gas sensor according to the first and second arrangements.
FIG. 32 is a cross-sectional view for explaining a hydrogen sensor according to a third arrangement.
FIG. 33 is a cross-sectional view illustrating a modified example of the hydrogen sensor according to the third arrangement.
FIG. 34 is a cross-sectional view illustrating an example of a detection circuit of a thermal conductivity hydrogen sensor.
FIG. 35 is a cross-sectional view illustrating the multisensor including the gas sensor according to the first to third arrangements.
FIG. 36 is a cross-sectional view illustrating another multisensor according to the arrangement.

DETAILED DESCRIPTION

According to one arrangement, a gas sensor is disclosed. The gas sensor includes a MEMS capacitor, a gas concentration calculating unit, a first temperature sensor, a second temperature sensor, and a temperature control unit. The MEMS capacitor includes a first electrode and a movable structure disposed apart from the first electrode. The movable structure includes a deformable member that deforms by absorption or adsorption of a predetermined gas, a heater to heat the deformable member, and a second electrode. An interval between the second electrode and the first electrode changes in response to the deformation of the deformation member. The gas concentration calculating unit calculates a concentration of the predetermined gas based on the interval between the first electrode and the second electrode. The first temperature sensor detects a temperature of the heater. The second temperature sensor detects a temperature of environment in which the MEMS capacitor is used.
The temperature control unit control a temperature of the heater based on the temperature of the heater detected by the first temperature sensor and the temperature of the environment detected by the second temperature sensor.
Arrangements will be described hereinafter with reference to the accompanying drawings. The drawings are schematic or conceptual drawings, and dimensions and ratios are not necessarily the same as those in reality. Further, in the drawings, the same reference symbols (including those having different subscripts) denote the same or corresponding parts, and overlapping explanations thereof will be made as necessary. In addition, as used in the description and the appended claims, what is expressed by a singular form shall include the meaning of "more than one."

(First Arrangement)

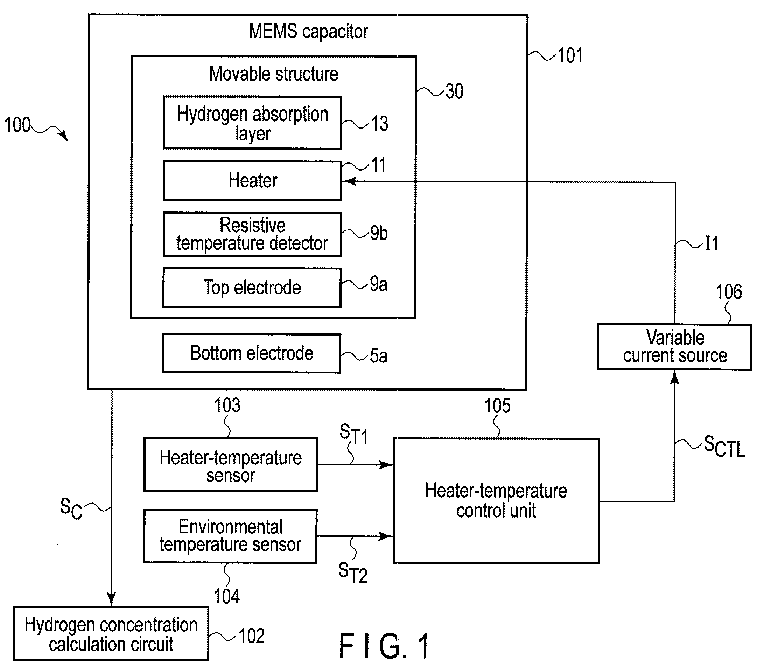

FIG. 1 is a schematic configuration diagram of a hydrogen sensor 100 according to the first arrangement.
The hydrogen sensor 100 is a capacitive hydrogen sensor that detects gas hydrogen, and includes a MEMS capacitor 101, a hydrogen concentration calculation circuit 102, a heater-temperature sensor 103, an environmental temperature sensor 104, a heater-temperature control unit 105, and a variable current source 106. The components 103 to 106 are used to improve performance (detection sensitivity, consumption power or the like) of the hydrogen sensor 100 as described below.
The MEMS capacitor 101 includes a bottom electrode (fixed electrode) 5a, and a movable structure 30 provided above the bottom electrode 5a.
The movable structure 30 includes a top electrode (movable electrode) 9a, a heater 11 and a hydrogen absorption layer 13. The movable structure 30 further includes a resistive temperature detector 9b that composes part of the heater-temperature sensor. The movable structure 30 is configured to be able to move the top electrode 9a. Details of a structure and an operation of the movable structure 30 will be described below, yet will be briefly described as follows.
The hydrogen absorption layer 13 absorbs or adsorbs hydrogen. The hydrogen absorption layer 13 deforms while absorbing or adsorbing the hydrogen, and the position of the hydrogen absorption layer 13 is displaced upward or downward. The degree of displacement of the hydrogen absorption layer 13 corresponds to a hydrogen absorption amount or adsorption amount. While the position of the top electrode 9a is displaced as the position of the hydrogen absorption layer 13 is displaced, the position of the bottom electrode 5a does not change. When the position of the hydrogen absorption layer 13 is displaced upward, the position of the top electrode 9a is also displaced upward. As a result, an interval between the bottom electrode 5a and the top electrode 9a widens, and a capacitance of the MEMS capacitor 101 decreases. Meanwhile, when the position of the hydrogen absorption layer 13 is displaced downward, the position of the top electrode 9a is also displaced downward. As a result, the interval between the bottom electrode 5a and the top electrode 9a narrows, and the capacitance of the MEMS capacitor 101 increases.
The heater 11 is configured to generate heat and heat the hydrogen absorption layer 13. According to the present arrangement, the heater 11 uses resistance heating. The heater 11 includes a conductor such as Ti, TiN (titanium nitride), Ni, Al, Cu, Pd, Pt or Pd-Ni.

The variable current source 106 supplies a current (heater-current) I1 to the heater 11. The variable current source 106 receives an input of a control signal $S_{CTL}$, and a magnitude of the current I1 flowing through the heater 11 is controlled by the control signal $S_{CTL}$ as described below. The heater 11 generates heat corresponding to the magnitude of the current I1 and a resistance value of the heater 11. When heat is generated, the temperature of the heater 11 rises. In proportion to the amount of heat generated by the heater 11, a temperature rise range of the heater 11 becomes greater. The temperature rise range of the heater 11 can be defined by, for example, a value obtained by subtracting the temperature of the heater 11 in a state where the current I1 does not flow through the heater 11 from the temperature of the heater 11 in a state where the current I1 flows through the heater 11. The variable current source 106 may be a current source outside the hydrogen sensor 100.

A humidity around the hydrogen absorption layer 13 is a disturbance that influences detection precision of the hydrogen sensor 100. To reduce this disturbance influence, it is important to stably operate the gas sensor. Hence, in the present arrangement, before hydrogen is detected, the heater 11 heats the hydrogen absorption layer 13 and keeps the humidity to be within a constant range or as a constant humidity to reduce the disturbance influence. Heating the hydrogen absorption layer 13 contributes to improvement of responsivity and hysteresis of the sensor.

On the other hand, it is concerned that, when the temperature of the hydrogen absorption layer 13 exceeds a certain value due to heating by the heater 11, characteristics of the hydrogen absorption layer 13 deteriorate, and performance of the hydrogen sensor 100 lowers as a result. That the temperature of the hydrogen absorption layer 13 exceeds the certain value leads to an increase in power consumption. Therefore, it is necessary to keep the temperatures of the heater 11 and the hydrogen absorption layer 13 constant to be within a certain range. To keep the humidity constant, for example, it is necessary to sufficiently heat the hydrogen absorption layer 13 and the heater 11 to 100°C or more. On the other hand, to prevent deterioration of the characteristics of the hydrogen absorption layer 13, it is necessary to heat the hydrogen absorption layer 13 to, for example, 200°C or less.

An attainment temperature (Theat) of the heater 11 is expressed by the following equation.

$$\texttt{Theat = Tenv + } \Delta\texttt{T}$$

In this regard, Tenv represents an environmental temperature, and ΔT represents a temperature rise range of the heater 11.

In view of the above equation, the attainment temperature of the heater 11 depends on the environmental temperature. When, for example, the environmental temperature at which the hydrogen sensor 100 according to the arrangement is used is from -30°C to 100°C, and a control range of the heater 11 is from 125°C to 150°C, the temperature rise range ΔT needs to be 155°C to 180°C when the environmental temperature is -30°C, and the temperature rise range ΔT needs to be 25°C to 50°C when the environmental temperature is 100°C.

As described below, the heater 11 and the hydrogen absorption layer 13 are usually insulated thermally from surrounding environment to enable the heater 11 to efficiently heat the hydrogen absorption layer 13. When the thermally insulated heater 11 is used, an attainment temperature (heater temperature) of the heater 11 is generally different from the environmental temperature. The temperature sensor that measures the environmental temperature is a temperature sensor that is provided outside a region in which the heater 11 and the hydrogen absorption layer 13 are thermally insulated, and is externally attached to the heater 11 and the hydrogen absorption layer 13. Hence, the temperature sensor that measures the environmental temperature has difficulty in monitoring a heater temperature. As a result, it is difficult to precisely control the temperature of the heater 11 and provide a gas sensor that has sufficient performance.

Hence, in the present arrangement, the resistive temperature detector 9b that composes part of the heater-temperature sensor 103 is disposed in the thermally insulated region including the heater 11 and the hydrogen absorption layer 13 to measure the heater temperature. The resistance of the resistive temperature detector 9b changes in response to a change in a heater temperature, so that it is possible to calculate the heater temperature by measuring the resistance of the resistive temperature detector 9b. Furthermore, the environmental temperature sensor 104 is disposed in a region different from the thermally insulated region including the heater 11 and the hydrogen absorption layer 13 to measure the environmental temperature.

The environmental temperature sensor 104 is desirably formed on the same substrate as the substrate on which the MEMS capacitor 101 is formed, yet may be externally attached to the substrate.

In this regard, when there is not the heater-temperature sensor 103, heating needs to be performed assuming the worst case. In the above example of the environmental temperature range, the worst case is a case where the environmental temperature is -30°C. When the environmental temperature is -30°C, and heating is performed at 125°C or more to suppress a humidity influence, the heater needs to perform heating such that the temperature rise range $\Delta T$ is 155°C or more. However, when the environmental temperature is 100°C, an attainment temperature of the heater is 255°C or more (a heat resistant temperature of the hydrogen absorption layer 13 or more), and exceeds 150°C that is an upper limit of a control range. Therefore, when there is not the heater-temperature sensor 103, the hydrogen sensor cannot be used in the environmental temperature range from -30°C to 100°C, and the temperature range that allows use of the hydrogen sensor is limited. However, the hydrogen sensor 100 according to the present arrangement including the heater-temperature sensor 103 can be used in a wide temperature range.

The hydrogen absorption layer 13 is heated before, for example, hydrogen is detected. The hydrogen absorption layer 13 does not need to be heated every time before hydrogen is detected. For example, the hydrogen absorption layer 13 may be heated even after hydrogen is detected a certain number of times. Furthermore, the hydrogen absorption layer 13 may be heated while hydrogen is being detected.

The heater-temperature sensor 103 is configured to detect a temperature (heater temperature T1) corresponding to heat generated by the heater 11. The heater-temperature sensor 103 detects the temperature by using the fact that an electric resistance of a metal changes in proportion to the temperature.

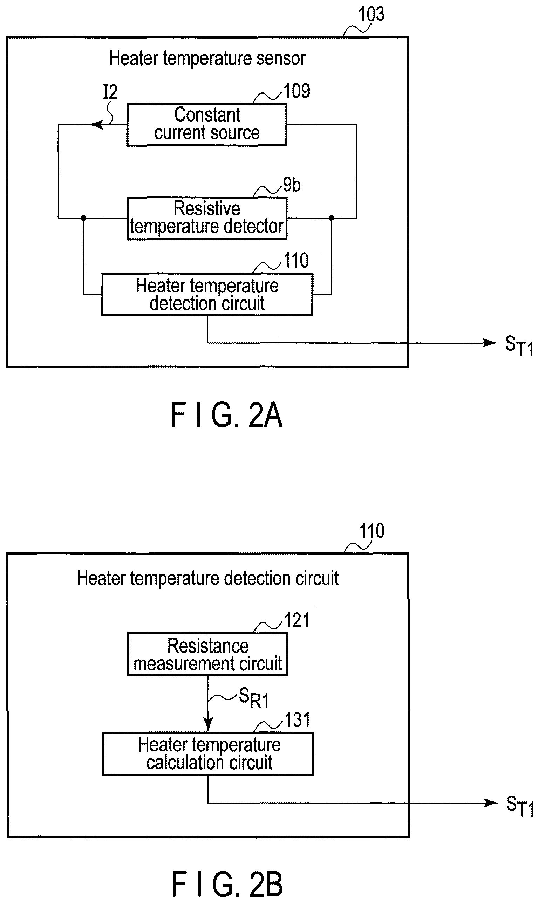

As illustrated in FIG. 2A, the heater-temperature sensor 103 includes the resistive temperature detector (metal) 9b, a constant current source 109 that causes a constant current I2 to flow through the resistive temperature detector 9b, and a heater temperature detection circuit 110 that measures a resistance value of the resistive temperature detector 9b in a state where the current I2 flows through the resistive temperature detector 9b, and calculates a heater temperature based on the resistance value. The heater temperature detection circuit 110 outputs a heater temperature signal $S_{T1}$ corresponding to the calculated heater temperature T1.

In this regard, FIG. 2A illustrates that the resistive temperature detector 9b, the constant current source 109 and the heater temperature detection circuit 110 are provided in the same region. However, as described above, the resistive temperature detector 9b is provided in the movable structure 30, and may be different in a region different from that of the constant current source 109 and the heater temperature detection circuit 110.

As illustrated in, for example, FIG. 2B, the heater temperature detection circuit 110 includes a resistance measurement circuit 121 and a heater temperature calculation circuit 131. The resistance measurement circuit 121 measures the resistance value of the resistive temperature detector 9b in a state where the current I2 flows through the resistive temperature detector 9b. The resistance measurement circuit 121 outputs a resistance signal $S_{R1}$ corresponding to the measured resistance value. The resistance signal $S_{R1}$ is inputted to the heater temperature calculation circuit 131. The heater temperature calculation circuit 131 calculates the heater temperature T1 based on the resistance signal $S_{R1}$. The heater temperature detection circuit 110 is composed by using a CMOS circuit, for example.

Note that, FIGS. 2A and 2B illustrate a configuration example of the heater-temperature sensor 103, and the heater-temperature sensor 103 can employ various configurations. For example, the constant current source 109 may be a constant current source provided outside the heater-temperature sensor 103. Furthermore, the constant current source 109 may be a constant voltage source.

The environmental temperature sensor 104 is configured to detect a temperature (environmental temperature T2) of surrounding environment in which the MEMS capacitor 101 is used. As described above, the heater 11 and the hydrogen absorption layer 13 in the movable structure 30 are thermally insulated from the surrounding environment, and therefore the environmental temperature is different from the heater temperature.

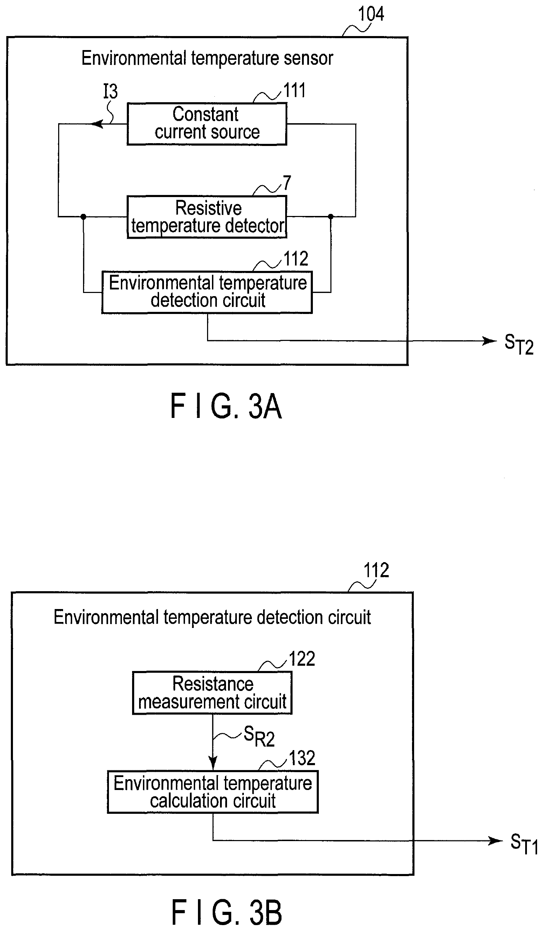

As illustrated in FIG. 3A, the environmental temperature sensor 104 includes a resistive temperature detector 7, a constant current source 111 which causes a constant current I3 to flow through the resistive temperature detector 7, and an environmental temperature detection circuit 112 which measures a resistance value of the resistive temperature detector 7 in a state where the current I3 flows through the resistive temperature detector 7, and calculates the environmental temperature T2 based on the resistance value. The environmental temperature detection circuit 112 outputs an environmental temperature signal $S_{T2}$ corresponding to the calculated environmental temperature T2.

Note that, FIG. 3A illustrates that the resistive temperature detector 7, the constant current source 111 and the environmental temperature detection circuit 112 are provided in the same region, however the resistive temperature detector 7 may be provided in a region different from that of the constant current source 111 and the environmental temperature detection circuit 112.

As illustrated in, for example, FIG. 3B, the environmental temperature detection circuit 112 includes a resistance measurement circuit 122 and an environmental temperature calculation circuit 132. The resistance measurement circuit 122 measures the resistance value of the resistive temperature detector 7 in a state where the current I3 flows through the resistive temperature detector 7. The resistance measurement circuit 122 outputs a resistance signal $S_{R2}$ corresponding to the measured resistance value. The resistance signal $S_{R2}$ is inputted to the environmental temperature calculation circuit 132. The environmental temperature calculation circuit 132 calculates the environmental temperature T2 based on the resistance signal $S_{R2}$. The environmental temperature detection circuit 112 is composed by using a CMOS circuit, for example.

Note that, FIGS. 3A and 3B illustrate a configuration example of the environmental temperature sensor 104, and the environmental temperature sensor 104 can employ various configurations. For example, the constant current source 111 may be a constant current source provided outside the environmental temperature sensor 104. Furthermore, the constant current source 111 may be a constant voltage source.

The constant current source 109 of the heater temperature sensor 103 and the constant current source 111 of the environmental temperature sensor 104 may be one common constant current source or constant voltage source.

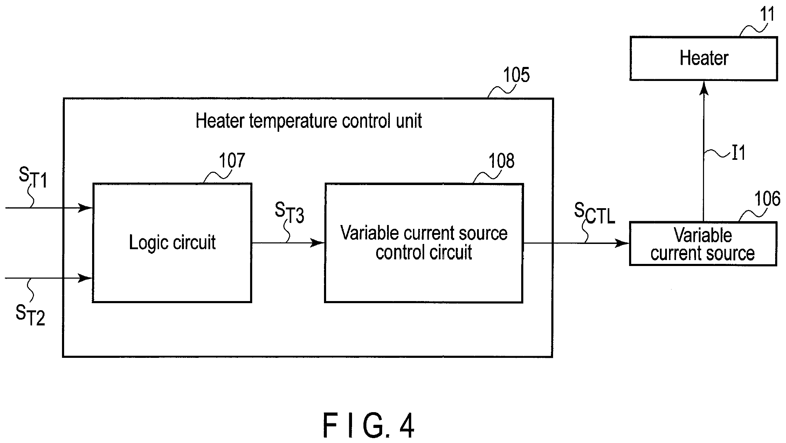

Back to FIG. 1, the heater temperature signal $S_{T1}$ and the environmental temperature signal $S_{T2}$ are inputted to the heater-temperature control unit 105. As illustrated in, for example, FIG. 4, the heater-temperature control unit 105 includes a logic circuit 107 and a variable current source control circuit 108. The logic circuit 107 and the variable current source control circuit 108 are respectively composed by using CMOS circuits.

The logic circuit 107 receives an input of the heater temperature signal $S_{T1}$ and the environmental temperature signal $S_{T2}$. The logic circuit 107 decides whether or not the heater temperature T1 is within a predetermined temperature range. Data related to the predetermined temperature range is stored in, for example, a memory in the logic circuit 107. The predetermined temperature range is determined based on a specification of the hydrogen absorption layer 13 of the hydrogen sensor 100.

When the heater temperature T1 is not within the predetermined temperature range, the logic circuit 107 generates a decision result signal $S_{T3}$ corresponding to decision that the heater temperature needs to be changed. The logic circuit 107 generates as the decision result signal $S_{T3}$, for example, such a difference (e.g., T1'-T1) between a heater temperature T1' and the heater temperature T1 (a temperature corresponding to a heater temperature signal $S_{T1}$) that the heater temperature T1 is to be within the predetermined temperature range.

The logic circuit 107 is configured to be able to calculate the heater temperature T1' corresponding to the heater temperature T1 which is not within the predetermined temperature range. To realize this configuration, the logic circuit 107 needs to be configured to be able to refer to a table related to an association between the heater temperature T1 which is not within the predetermined temperature range and the heater temperature T1'. The heater temperature range T1' associated with the heater temperature T1 which is not listed in the table and is not within the predetermined temperature range is obtained by, for example, interpolation. This interpolation is executed by the logic circuit 107. Furthermore, the table is stored in the memory in the logic circuit 107 or in an external memory of the logic circuit 107. Furthermore, the logic circuit 107 may be configured to calculate the heater temperature T1' without referring to the table.

On the other hand, when the heater temperature T1 is within the predetermined temperature range, the logic circuit 107 generates the decision result signal $S_{T3}$ corresponding to decision that the heater temperature does not need to be changed.

The decision result signal $S_{T3}$ is inputted to the variable current source control circuit 108. The variable current source control circuit 108 outputs a control signal $S_{CTL}$ for controlling the variable current source 106 based on the decision result signal $^{S}T3$.

The control signal $S_{CTL}$ is inputted to the variable current source 106. The variable current source 106 generates the current I1 to supply to the heater 11 based on the control signal $S_{CTL}$.

More specifically, when the control signal $S_{CTL}$ corresponding to a case where the heater temperature T1 is outside the predetermined range is inputted to the variable current source 106, the variable current source 106 generates the current I1 having such a necessary magnitude that the heater temperature T1 is within the predetermined range. In this regard, when the heater temperature T1 is less than a lower limit of the predetermined range, the current I1 increases. When the heater temperature T1 exceeds the upper limit of the predetermined range, the current I1 decreases. Meanwhile, when the control signal $S_{CTL}$ corresponding to the case where the heater temperature T1 is within the predetermined range is inputted to the variable current source 106, the magnitude of the current I1 is not changed.

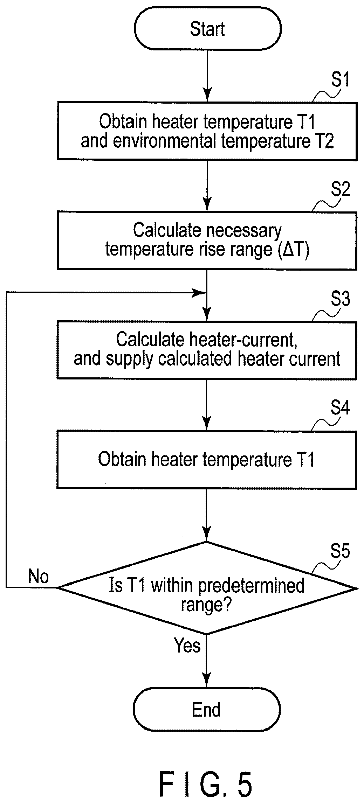

A method for controlling the above heater temperature T1 is indicated by a flowchart in FIG. 5, for example. First, the heater temperature T1 and the environmental temperature T2 are obtained (step S1). The heater temperature T1 corresponds to the heater temperature signal $S_{T1}$, and the environmental temperature T2 corresponds to the environmental temperature signal $S_{T2}$. Processing in step S1 is executed by the heater-temperature sensor 103 and the environmental temperature sensor 104.

Next, the temperature rise range ($\Delta$T) which is necessary in a case of the environmental temperature T2 is calculated (step S2). Processing in step S2 is executed by the heater-temperature control unit 105. When the heater-temperature control unit 105 employing the configuration in FIG. 4 is employed, the processing in step S2 is executed by the logic circuit 107.

Next, the heater-current I1 which is necessary to realize the calculated temperature rise range ($\Delta$T) is calculated, and the variable current source 106 is controlled to supply this calculated heater-current I1 to the heater 11 (step S3). Processing in step S3 is executed by the heater-temperature control unit 105. When the heater-temperature control unit 105 employing the configuration in FIG. 4 is employed, the processing in step S3 is executed by the variable current source control circuit 108.

Next, the heater temperature T1 is obtained (step S4). The heater temperature T1 corresponds to the heater temperature signal ST1. Processing in step S4 is executed by the heater-temperature sensor 103.

Next, whether or not the heater temperature T1 is within the predetermined temperature range is determined (step S5). Processing in step S5 is executed by the heater-temperature control unit 105. When the heater-temperature control unit 105 employing the configuration in FIG. 4 is employed, the processing in step S3 is executed by the logic circuit 107 and the variable current source control circuit 108.

When a decision result in step S5 is No, the processing returns to step S3 to set and supply the heater-current I1 again such that the heater temperature T1 is to be within the predetermined temperature range. A loop in steps S3 to S5 is performed until, for example, the decision result in step S5 becomes Yes. However, there may be employed a configuration where, even when the loop in steps S3 to S5 is repeated a certain number of times, if Yes cannot be obtained in step S5, the loop in steps S3 to S5 is interrupted. In this case, for example, the heater-current I1 determined in step S3 in the last loop is supplied to the heater 11.

According to the hydrogen sensor according to the present arrangement, the heater-temperature sensor 103 can precisely measure the heater temperature, so that it is possible to precisely control the temperature of the hydrogen absorption layer 13 heated by the heater 11. Consequently, it is possible to keep the humidity around the hydrogen absorption layer 13 to be within a constant range or as a constant humidity, it is possible to minimize a disturbance influence which influences detection precision, and improve characteristics such as responsivity and hysteresis of the sensor. Furthermore, it is also possible to prevent that the temperature of the hydrogen absorption layer 13 exceeds a certain value. Consequently, it is possible to suppress performance deterioration and an increase in power consumption of the hydrogen absorption layer 13. Consequently, the present arrangement can improve performance of the hydrogen sensor, so that it is possible to provide the hydrogen sensor having sufficient performance.

Furthermore, when the above predetermined temperature range is a range from $T_{min}$ to $T_{max}$ at maximum, yet the above predetermined temperature range may be a range from $T_{min1}$ ($> T_{min}$) to $T_{max1}$ ($< T_{max}$) narrower than this range.

Note that, when the heater temperature T1 is controlled such that the heater temperature T1 is a predetermined temperature, the heater temperature T1 is more or less shifted from the predetermined temperature. The present arrangement defines that, when such a shift (error) occurs, the heater temperature T1 is controlled to be fed back such that the heater temperature T1 is to be the predetermined temperature.

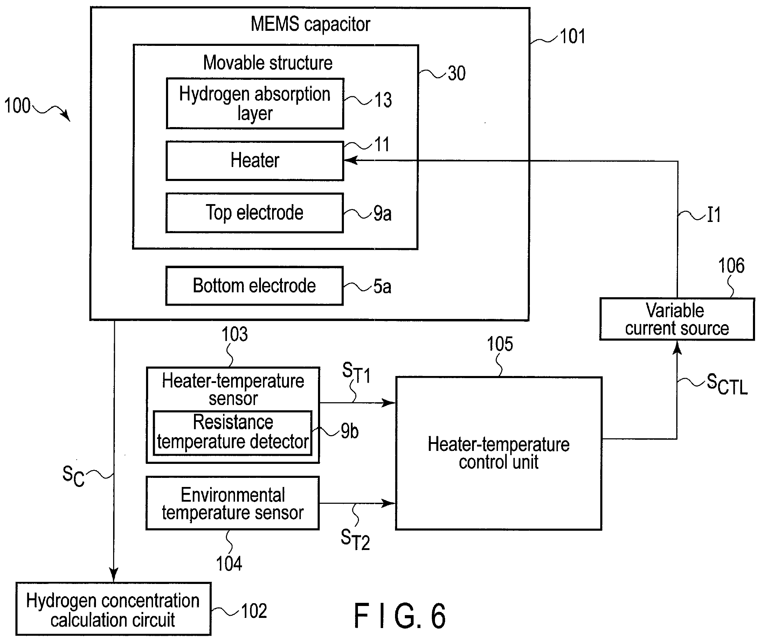

Note that, the resistive temperature detector 9b which composes part of the heater-temperature sensor is provided in the MEMS capacitor 101 (movable structure body 130) in FIG. 1, yet may be provided outside the MEMS capacitor 101 as illustrated in FIG. 6. That is, an arrangement portion of the resistive temperature detector 9b may be a portion at which the heater temperature can be measured with necessary precision.

Furthermore, the hydrogen sensor 100 may be mounted on one substrate (chip) or may be mounted on a plurality of substrates (chips).

In a case of the hydrogen sensor 100 employing the configuration in FIG. 1, for example, the MEMS capacitor 101 including the resistive temperature detector 9b may be mounted on a first substrate (chip), and portions such as the environmental temperature sensor 104 and the heater-temperature control unit 105 other than the resistive temperature detector 9b of the heater-temperature sensor 103 may be mounted on a second substrate (chip) different from the first substrate. Furthermore, the hydrogen concentration calculation circuit 102 is mounted on the first substrate or the second substrate, for example. The hydrogen concentration calculation circuit 102 may be externally attached to the first substrate. Similarly, the variable current source 106 is mounted on the first substrate or the second substrate, for example.

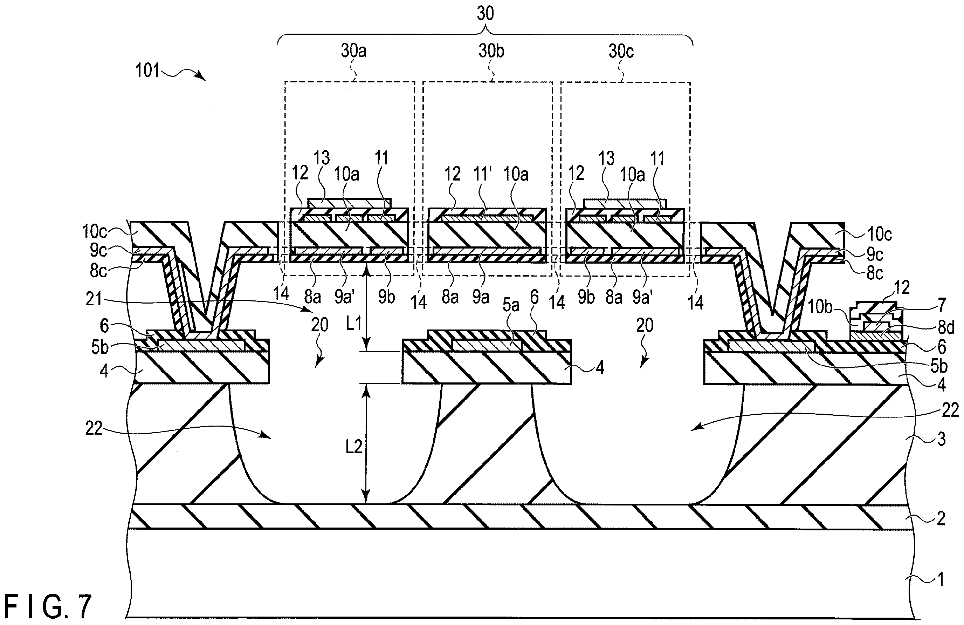

FIG. 7 is a cross-sectional view illustrating a specific structure example of the MEMS capacitor 101. In this example, the resistive temperature detector 7, the resistive temperature detector 9b and the MEMS capacitor 101 are mounted on a silicon substrate (substrate region) 1.

An insulation layer (substrate region) 2 and an insulation layer (substrate region) 3 are provided on the silicon substrate 1.

A material of the insulation layer 2 is different from a material of the insulation layer 3. When, for example, the insulation layer 2 and the insulation layer 3 are ashed (dry-etched) by using oxygen ($O_2$), the materials of the insulation layer 2 and the insulation layer 3 are selected such that an etching rate of the insulation layer 3 is higher than an etching rate of the insulation layer 2. The material of the insulation layer 2 is, for example, a silicon nitride, and the material of the insulation layer 3 is, for example, polyimide. The insulation layer 3 is thicker than the insulation layer 2, for example.

Trenches reaching the insulation layer 2 are provided in the insulation layer 3, and part of an upper surface of the insulation layer 2 is exposed. According to the present arrangement, side surfaces of the insulation layer 3 have tapered shapes (curves which protrude downward) which narrow from an upper side to a lower side as illustrated in the cross-sectional view in FIG. 7. Cross sections of the side surfaces of the insulation layer 3 may be defined as a linear cross section or may be defined as linear and curved cross sections. Furthermore, on an orthogonal coordinate system defined by three axes orthogonal to each other, the side surfaces of the insulation layer 3 which define the trenches are the curved surfaces. The side surfaces have, for example, a negative curvature. Furthermore, when a sufficient heat resistance is secured, there may not be the insulation layer 3.

The insulation layer 4 is provided on the insulation layer 3. A material of the insulation layer 4 is, for example, a silicon nitride. Openings 20 are provided in the insulation layer 4. The insulation layer 4 and the insulation layers 2 and 3 define two lower cavity regions (second cavity regions) 22. A height L2 of the lower cavity region 22 is larger than 10 $\mu$m, for example. The insulation layer 4 is provided with a spring portion (not illustrated) for a lower electrode.

A bottom electrode 5a and conductive metal layers 5b are provided on the insulation layer 4. The metal layers 5b are used as bases of anchors 9c. The bottom electrode 5a and the metal layers 5b include the same conductive material, and include, for example, aluminum (Al), titanium (Ti) or titanium nitride (TiN).

An insulation layer 6 is provided on the insulation layer 4 and the bottom electrode 5a on the insulation layer 4. Similarly, the insulation layer 6 is provided on the insulation layer 4 and the metal layers 5b on the insulation layer 4. A material of the insulation layer 6 is, for example, a silicon nitride.

An insulation layer 8d is provided on the insulation layer 6 which covers the metal layer 5b. The resistive temperature detector 7 of the environmental temperature sensor is provided at a center portion of the insulation layer 8d. A material of the resistive temperature detector 7 is, for example, platinum (Pt), a silicon nitride (TiN) or titanium (Ti). Pt is advantageous in terms of stability and precision of the environmental temperature sensor. TiN and Ti are materials containing a high melting point metal which is generally used in a semiconductor process, and is advantageous for manufacturing the hydrogen sensor (a device including a semiconductor). An insulation layer 10b is provided on the insulation layer 6 to cover the resistive temperature detector 7. An insulation layer 12 is provided on the insulation layer 10b. The insulation layer 8d, the insulation layer 10b and the insulation layer 12 form films (passivation films) which protect the resistive temperature detector 7. In more detail, the passivation films prevent in advance occurrence of a failure factor such as corrosion of the resistive temperature detector 7 due to humidity.

The resistive temperature detector 7 is provided on the insulation layer 6 in FIG. 7. However, the resistive temperature detector 7 may be provided on another member.

The movable structure 30 is disposed above the bottom electrode 5a. The movable structure 30 includes a hydrogen actuator 30a, an upper electrode portion 30b and a hydrogen actuator 30c. The upper electrode portion 30b is provided between the hydrogen actuator 30a and the hydrogen actuator 30c. One end portion of the upper electrode portion 30b is connected to the hydrogen actuator 30a via a spring portion 14. The other end portion of the upper electrode portion 30b is connected to the hydrogen actuator 30c via the other spring portion 14. The upper electrode portion 30b is connected to an unillustrated external circuit.

There is a cavity region (upper cavity region) 21 below the movable structure 30 (30a, 30b and 30c). The upper cavity region 21 below the hydrogen actuator 30a communicates with the lower cavity regions 22 via the openings 20. Similarly, the upper cavity region 21 below the hydrogen actuator 30c also communicates with the lower cavity regions 22 via the openings 20. The height (L1) of the upper cavity region 21 is lower than the heights (L2) of the lower cavity regions 22 (L1 < L2). Furthermore, when a sufficient heat resistance is secured, the height (L1) of the upper cavity region 21 may be lower than the heights (L2) of the lower cavity regions 22.

The upper electrode portion 30b includes an insulation layer 8a, the top electrode 9a, an insulation layer 10a, a conductive layer (dummy metal) 11' and the insulation layer 12.

The top electrode 9a is disposed on the insulation layer 8a to oppose to the bottom electrode 5a. The top electrode 9a and the bottom electrode 5a are two capacitor electrodes which form the MEMS capacitor. A material of the top electrode 9a contains, for example, TiN. The material of the top electrode 9a may contain another conductive material such as Ti instead of TiN.

In the upper electrode portion 30b, the insulation layer 10a is provided on the insulation layer 8a to cover the top electrode 9a. The conductive layer 11' is provided on the insulation layer 10a. The conductive layer 11' is provided for the purpose of suppressing a warp due to a residual stress of the insulation layer 10a. For the above purpose, for example, the shape and the dimension of the conductive layer 11' are the same as those of the top electrode 9a. The material of the conductive layer 11' is, for example, Ti, TiN, Ni, Cu, Pd, Pt or Pd-Ni. The conductive layer 11' is not connected to the variable current source 106 illustrated in FIG. 1, and the conductive layer 11' does not function as the heater.

In the upper electrode portion 30b, the insulation layer 12 is provided on the insulation layer 10a to cover the conductive layer 11'. A material of the insulation layer 10a is, for example, a silicon nitride.

Each of the hydrogen actuators 30a and 30c includes the insulation layer 8a, a dummy electrode 9a', the resistive temperature detector 9b, the insulation layer 10a, the heater 11, the insulation layer 12 and the hydrogen absorption layer 13.

The dummy electrode 9a' and the resistive temperature detector 9b are provided on the insulation layer 8a. The shape of the dummy electrode 9a' is, for example, a plate shape or a mesh shape. The bottom electrode 5a is not provided below the dummy electrode 9a', and therefore the dummy electrode 9a' does not function as the upper electrode of the MEMS capacitor.

A material of the resistive temperature detector 9b is, for example, platinum (Pt), a titanium nitride (TiN) or titanium (Ti). The material of the resistive temperature detector 9b may be the same as or different from the material of the resistive temperature detector 7.

In each of the hydrogen actuators 30a and 30c, the insulation layer 10a is provided on the insulation layer 8a to cover the dummy electrode 9a' and the resistive temperature detector 9b. As a result, the resistive temperature detector 9b is covered by the insulation layer 8a and the insulation layer 10a. The resistive temperature detector 9b floats in a hollow portion, and is connected to the spring 14 and a spring 100b of high heat resistances. Hence, a surrounding heat resistance is high, and a thermal insulation structure is formed.

The heater 11 is provided on the insulation layer 10a. The heater 11 is disposed such that the resistive temperature detector 9b exists below the heater 11. The heaters 11 are disposed above the resistive temperature detectors 9b, so that it is possible to decrease areas of the hydrogen actuators 30a and 30c compared to a case where the heaters 11 and the resistive temperature detectors 9b are disposed in a planar direction in the same layer. When the areas of the hydrogen actuators 30a and 30c become small, the heat resistance increases, a heat insulation property increases, and heat capacity lowers, so that it is possible to realize lower power consumption and higher responsivity. In FIG. 7, one end portion of the resistive temperature detector 9b is disposed on an outer side of the heaters 11, yet the entire resistive temperature detector 9b may be disposed below the heater 11.

A material of the heater 11 is the same as the material of the conductive layer 11' in some cases and is different in some cases. According to the method for manufacturing the MEMS capacitor of the hydrogen sensor according to the arrangement described below, the material of the heater 11 is the same as the material of the conductive layer 11'. The heaters 11 are connected to the variable current source 106 illustrated in FIG. 1.

In each of the hydrogen actuators 30a and 30c, the insulation layer 12 is provided on the insulation layer 10a to cover the heater 11. As a result, the heater 11 is covered by the insulation layer 10a and the insulation layer 12. The heater 11 floats in the hollow portion, and the resistive temperature detector 9b is connected to the spring 14 and the spring 100b of the high heat resistances. Hence, a surrounding heat resistance is high, and a thermal insulation structure is formed. The hydrogen absorption layer 13 is provided on the insulation layer 12. The heaters 11 are used to heat the hydrogen absorption layer 13, and are thermally insulated as described above in the present arrangement.

The insulation layer 8a, the insulation layer 10a and the insulation layer 12 including the material having a high heat insulation property form a thermal insulation structure which sufficiently thermally insulates the resistive temperature detector 9b, the heater 11 and the hydrogen absorption layer 13 from surrounding environment (around the movable structure 30).

A material of the hydrogen absorption layer 13 contains, for example, palladium (Pd), an alloy containing palladium (Pd), an alloy containing copper (Cu) and silicon (Si) in this alloy, an alloy containing titanium (Ti), an alloy containing lanthanum (La) or metal glass. The metal glass contains, for example, the above metal (Pd, Ti or La) or an alloy thereof.

The hydrogen absorption layer 13 absorbs or adsorbs (accumulates) hydrogen and expands (a volume increases). When the hydrogen absorption layers 13 expand, the hydrogen actuators 30a and 30c deform, and a position of the upper electrode portion 30b is displaced upward or downward. As a result, an interval between the bottom electrode 5a and the top electrode 9a changes.

An expansion amount of the hydrogen absorption layer 13 changes according to a hydrogen absorption amount or a hydrogen adsorption amount, so that the interval between the bottom electrode 5a and the top electrode 9a changes according to the hydrogen absorption amount or the hydrogen adsorption amount. As a result, the capacitance of the MEMS capacitor changes according to the hydrogen absorption amount or the hydrogen adsorption amount of the hydrogen absorption layer 13.

As illustrated in FIG. 1, the MEMS capacitor 101 outputs a capacitance signal $S_C$ corresponding to the capacitance, and the capacitance signal $S_C$ is inputted to the hydrogen concentration calculation circuit 102. The hydrogen concentration calculation circuit 102 calculates a hydrogen concentration by calculating the capacitance based on the capacitance signal $S_C$. The hydrogen concentration calculation circuit 102 is composed by using a CMOS circuit, for example.

Both ends of the hydrogen actuator 30a are connected to the anchors 9c via the spring portions 14, respectively. An insulation layer 8c is provided on a lower side of the anchor 9c, and an insulation layer 10c is provided on an upper side of the anchor 9c. The same applies to the hydrogen actuator 30c, too.

To suppress an increase in power consumption of the heaters 11, heat escaping from the hydrogen actuators 30a and 30c including the heaters 11 needs to be reduced. To reduce the escaping heat, the upper cavity region 21 is made larger, and the heat resistance of the upper cavity region 21 is increased. To make the upper cavity region 21 larger, for example, the height L1 of the upper cavity region 21 needs to be made larger. When the height L1 is made larger, the interval between the bottom electrode 5a and the top electrode 9a widens. Widening the interval causes a decrease in the capacitance of the MEMS capacitor. As a result, hydrogen concentration detection sensitivity lowers.

Hence, in the present arrangement, the lower cavity regions 22 are provided below the upper cavity region 21. The upper cavity region 21 communicates with the lower cavity regions 22 via the openings 20, and the upper cavity region 21 and the lower cavity regions 22 are connected in series. Hence, a total heat resistance of the heat resistance of the upper cavity region 21 and the heat resistances of the lower cavity regions 22 is a sum of these two heat resistances. Consequently, it is possible to increase the heat resistances of the cavity regions below the hydrogen actuators 30a and 30c, suppress an increase in power consumption of the heaters 11 and enhance the hydrogen concentration detection sensitivity.

Consequently, the hydrogen sensor 100 which uses the MEMS capacitor 101 illustrated in FIG. 7 is configured to control the heater temperature T1 such that the environmental temperature T2 (a surrounding temperature of the hydrogen absorption layer 13) is to be within the predetermined temperature range, and, in addition, is configured to increase the heat resistances of the cavity regions below the hydrogen actuators 30a and 30c. Consequently, it is possible to easily reduce power consumption, and easily enhance the detection sensitivity.

Note that, in the present arrangement, one environmental temperature sensor is used, however a plurality of environmental temperature sensors may be used. In this case, the environmental temperature T2 is defined by, for example, an average temperature of a plurality of environmental temperatures measured by a plurality of environmental temperature sensors.

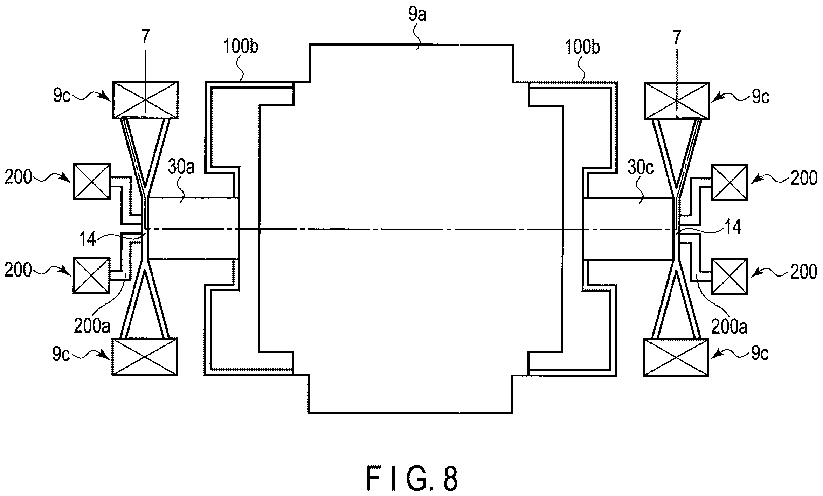

FIG. 8 is a plan view schematically illustrating part of the MEMS capacitor 101. A cross-sectional view in FIG. 7 corresponds to a cross-sectional view along a 7-7 line of the plan view in FIG. 8.

The heat resistance of the spring portion 14 is, for example, approximately 10 times as the total heat resistance of the heat resistance of the cavity region 21 and the heat resistances of the cavity regions 22. That is, the spring portion 14 has a sufficiently high heat resistance. Generally, a member having a high heat resistance has a small mechanical spring constant, and therefore is soft. When the spring constants of the spring portions 14 to be connected to the hydrogen actuators 30a and 30c are small, and, for example, hydrogen is detected, deformation of the hydrogen actuators 30a and 30c hardly transmits to the upper electrode portion 30b which is a capacitance portion, and hydrogen detection sensitivity deteriorates. Hence, the shapes and the property of the spring portions 14 need to be determined to make the end portions of the spring portions 14 as mechanical fixed ends in a pseudo manner such that the deformation of the hydrogen actuators 30a and 30c effectively transmits to the upper electrode portion 30b. From this viewpoint, the shapes of the spring portions 14 need to include a linear straight shape without a fold, and have a shape formed by connecting two spring portions of Y shapes in FIG. 8. Furthermore, the spring portions 14 have tensile stresses with respect to the silicon substrate 1 to increase the effect of the straight shape. The Y shape prevents the spring portions 14 from rotating even when the hydrogen actuators 30a and 30c absorb hydrogen and deform. Patterns of the spring portions 14 may have a linear shape as long as the linear shape can prevent rotation.

In FIG. 8, the spring portion 100b connects the hydrogen actuator 30a (30c) and the top electrode 9a. The heat resistance of the spring portion 100b formed by using a general process is, for example, approximately 10 times as the total heat resistance of the cavity regions 21 and 22. However, a function of the pseudo fixed end is not required, and therefore the spring portion 100b does not need to have the linear straight shape unlike the spring portions 14. The anchors 200 connect the heaters in the hydrogen actuator 30a to the external circuit (not illustrated). Spring portions 200a connect the anchors 200 and the hydrogen actuator 30a.

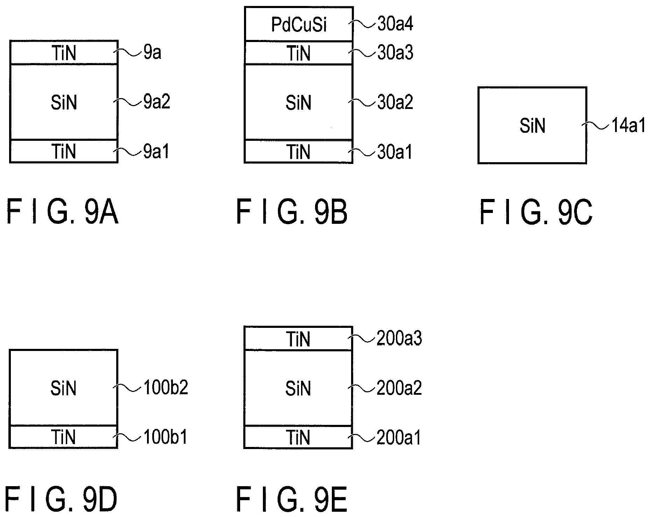

FIG. 9A is a cross-sectional view illustrating an example of the top electrode 9a and a structure (lower structure) below the top electrode 9a. The lower structure includes a structure formed by sequentially stacking a TiN layer 9a1 and a SiN layer 9a2. The thicknesses of the TiN layer 9a1, the SiN layer 9a2 and the top electrode 9a are, for example, 50 nm, 3 $\mu$m and 50 nm, respectively. The widths of the TiN layer 9a1, the SiN layer 9a2 and the top electrode 9a are, for example, 6 $\mu$m.

Note that, upper surfaces, lower surfaces and side surfaces of the TiN layers 9a and 9a1 are provided with insulation films (protective films) to prevent oxidation of the TiN layers 9a and 9a1, yet are omitted for simplification in FIG. 9A. The above insulation film is, for example, a thin insulation film which has the thickness of approximately 100 nm, and a material of the insulation film is, for example, a silicon nitride. Similarly, insulation films on the upper surface, the lower surface and the side surface of the TiN layer in FIGS. 9B, 9D and 9E are also omitted. Furthermore, TiN in FIGS. 9A, 9B, 9D and 9E is an exemplary conductive material, and other conductive materials may be used. For example, similar to the TiN layer (top electrode) 9a, Ti may be used.

FIG. 9B is a cross-sectional view illustrating an example of a structure of the hydrogen actuator 30a. The structure includes a structure formed by sequentially stacking a TiN layer 30a1, a SiN layer 30a2, a TiN layer (heater) 30a3, and a Pd layer (hydrogen absorption layer) 30a4. The thicknesses of the TiN layer 30a1, the SiN layer 30a2, the TiN layer 30a3 and the Pd layer 30a4 are, for example, 50 nm, 3 $\mu$m, 45 nm and 500 nm, respectively.

FIG. 9C is a cross-sectional view illustrating an example of the structure of the spring portion 14. The structure includes a SiN layer 14a1. The thickness and the width of the SiN layer 14a1 are, for example, 3 $\mu$m and 6 $\mu$m, respectively.

FIG. 9D is a cross-sectional view illustrating an example of the structure of the spring portion 100b. The structure includes a structure formed by sequentially stacking a TiN layer 100b1 and a SiN layer 100b2. The thicknesses of the TiN layer 100b1 and the SiN layer 100b2 are, for example, 50 nm and 3 $\mu$m, respectively. The widths of the TiN layer 100b1 and the SiN layer 100b2 are, for example, 6 $\mu$m.

FIG. 9E is a cross-sectional view illustrating an example of the structure of the spring portion 200a. The structure includes a structure formed by sequentially stacking a TiN layer 200a1, a SiN layer 200a2 and a TiN layer 200a3. The thicknesses of the TiN layer 200a1, the SiN layer 200a2 and the TiN layer 200a3 are, for example, 50 nm, 3 μm and 50 nm, respectively. The widths of the TiN layer 200a1, the SiN layer 200a2 and the TiN layer 200a3 are, for example, 8 μm or 6 μm.

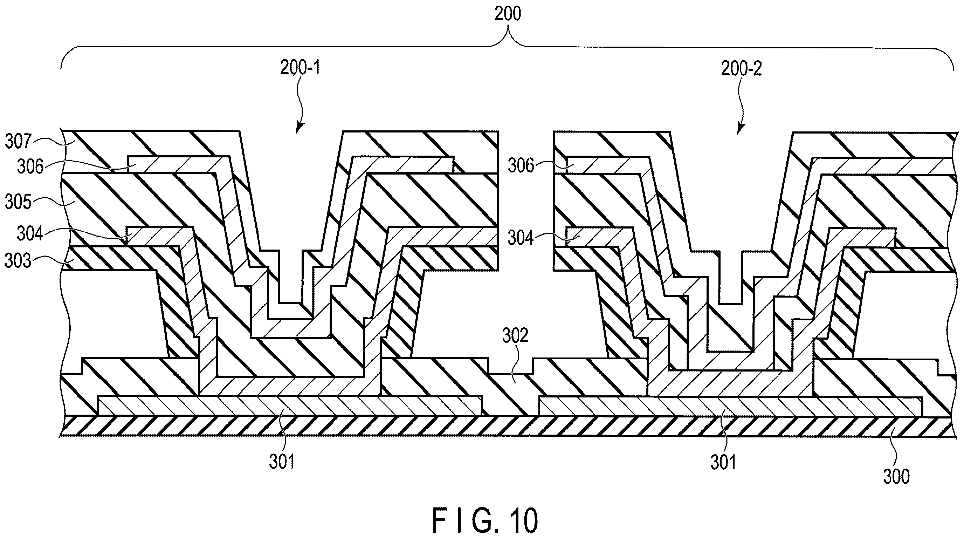

FIG. 10 is a cross-sectional view illustrating a detailed structure of the anchor 200. The anchor 200 includes an anchor via 200-1 of a lead wire of the upper electrode, and an anchor via 200-2 for a lead wire of the heater.

FIG. 10 illustrates insulation layers 300, 302, 303, 305 and 307. The wire 301 is formed by the same process as that of the lower electrode. The wire 304 is formed by the same process as that of the upper electrode. A wire 306 is formed by the same process as that of the heater.

In the anchor via 200-1, the wire 304 and the wire 306 are electrically insulated by the insulation layer 305. Furthermore, a right end portion of the wire 304 of the anchor via 200-1 is connected to the upper electrode (not illustrated). The wire 304 is connected to the external circuit (power supply) via the wire 301.

The anchor via 200-2 for the lead wire of the heater is electrically connected with the wire 304 and the wire 306. Furthermore, a right end portion of the wire 306 of the anchor via 200-2 is connected to the heater (not illustrated). The wire 306 is connected to the external circuit (power supply) via the wire 304 and the wire 301.

Note that, in the present arrangement, the number of hydrogen actuators is two, however the number of hydrogen actuators may be one or three or more.

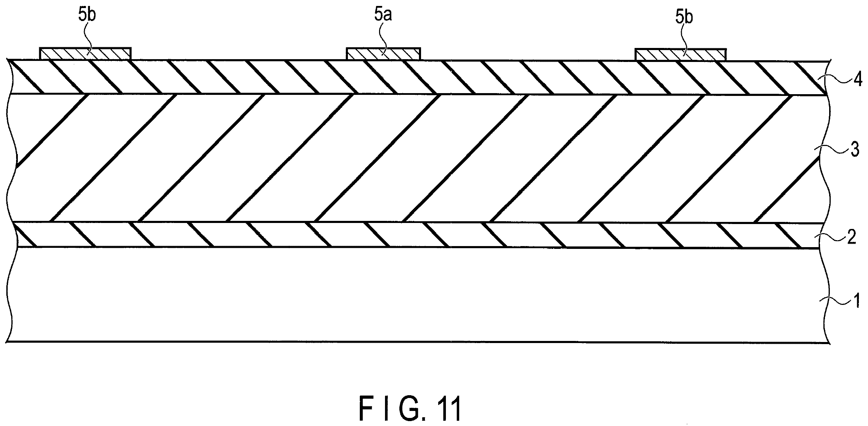

FIGS. 11 to 24 are cross-sectional views for explaining an example of the method for manufacturing the MEMS capacitor 101.

First, as illustrated in FIG. 11, the insulation layer 2, the insulation layer 3 and the insulation layer 4 are sequentially formed on the silicon substrate 1. A conductive layer to be processed into the bottom electrode 5a and the metal layer 5b is formed on the insulation layer 4, a resist pattern (not illustrated) is formed on the conductive layer, and the conductive layer is etched by using the resist pattern as a mask to form the bottom electrode 5a and the metal layer 5b.

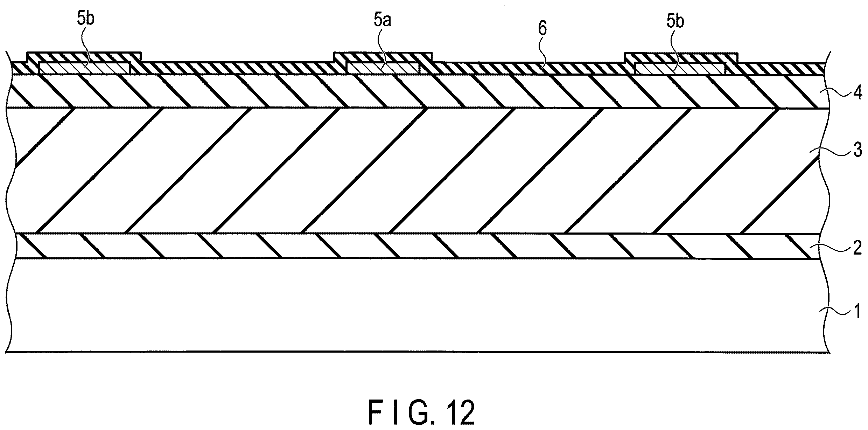

Next, as illustrated in FIG. 12, the insulation layer 6 which covers the insulation layer 4, the bottom electrode 5a and the metal layer 5b is formed. A material of the insulation layer 6 is, for example, the same as that material of the insulation layer 4.

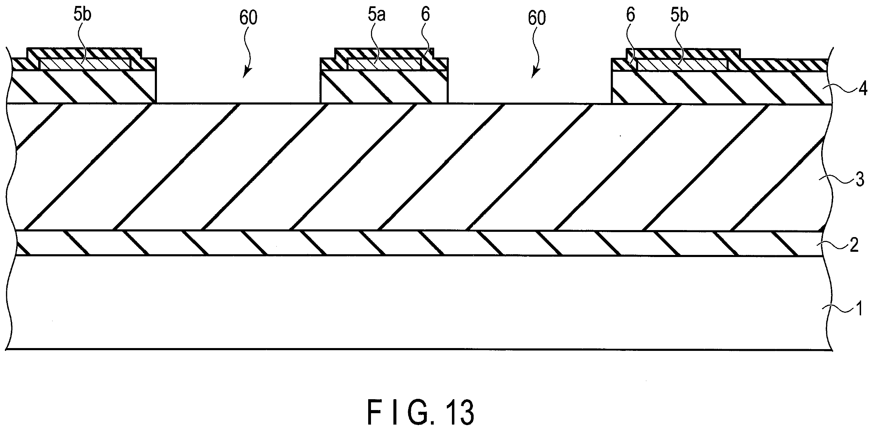

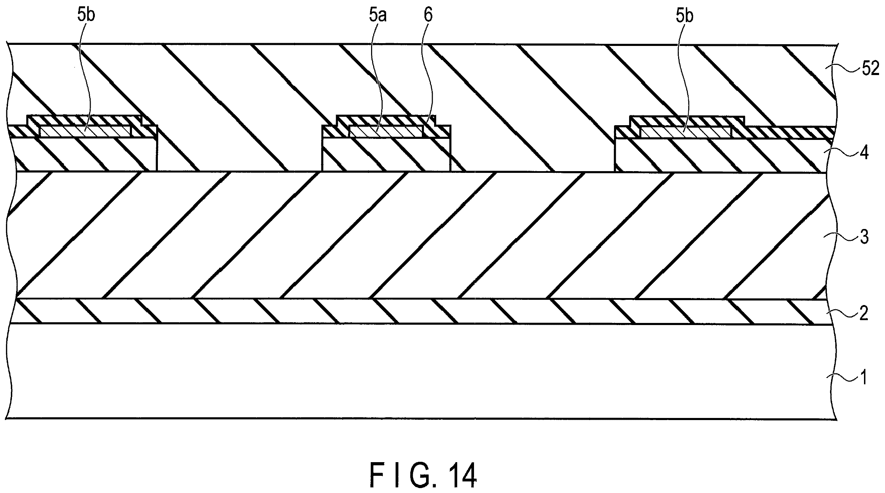

Next, as illustrated in FIG. 13, through-holes 60 which communicate with the insulation layer 3 are formed in the insulation layer 4 by etching which uses the unillustrated resist pattern as the mask. Subsequently, a sacrificial layer 52 is formed on the insulation layer 6 as illustrated in FIG. 14 to fill the through-holes 60. A material of the sacrificial layer 52 is the same as the material of the insulation layer 3 and is, for example, photosensitive polyimide. In this case, a surface of the sacrificial layer 52 may be planarized by, for example, Chemical Mechanical Polishing (CMP).

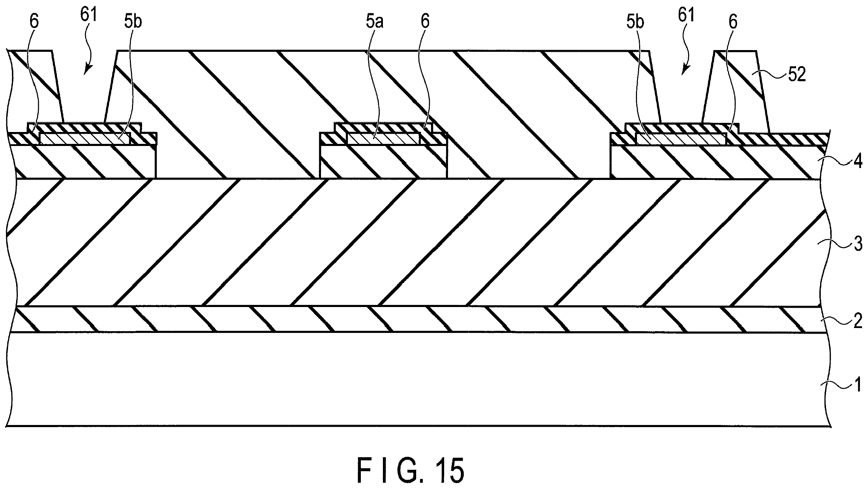

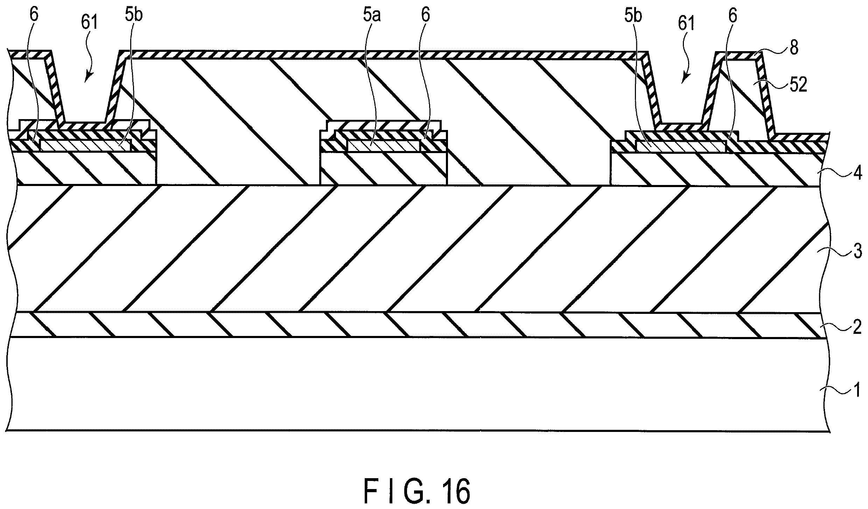

Next, as illustrated in FIG. 15, the sacrificial layer 52 is processed by photolithography to form in the sacrificial layer 52 through-holes 61 which communicate with the insulation layers 6 on the metal layers 5b. Subsequently, as illustrated in FIG. 16, the insulation layer 8 is formed on the entire surface to cover inner surfaces (side surfaces and bottom surfaces) of the through-holes 61. A material of the insulation layer 8 is, for example, the same as the material (silicon nitride) of the insulation layer 6.

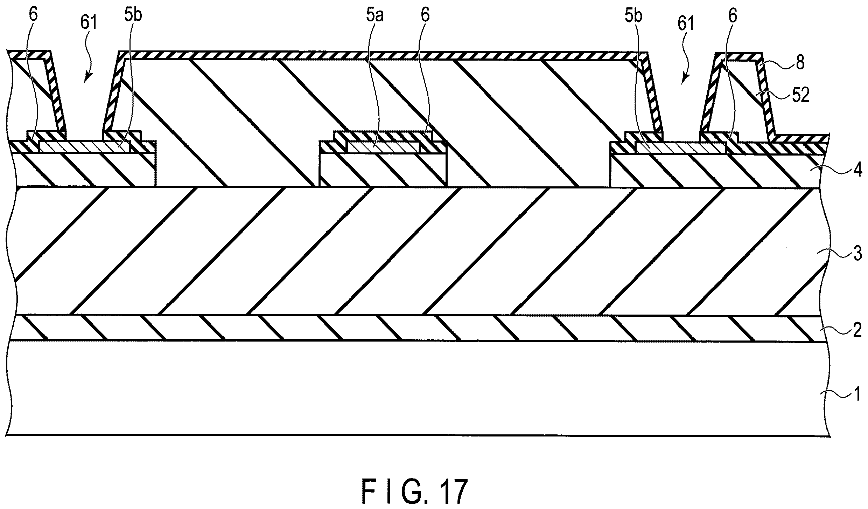

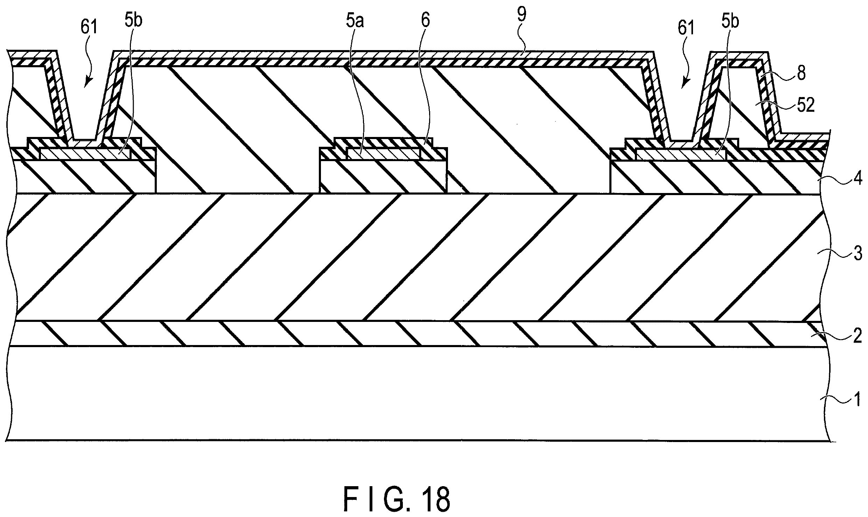

Next, as illustrated in FIG. 17, a photolithography process and an etching process are used to remove the insulation layers 6 on the bottoms of the through-holes 61 and expose part of the surfaces of the metal layers 5b. Subsequently, a conductive layer 9 to be processed into the top electrodes 9a, the dummy electrodes 9a', the resistive temperature detectors 7 and 9b and the anchors 9c illustrated in FIG. 7 is formed on the entire surface as illustrated in FIG. 18. The conductive layer 9 is formed to contact the exposed insulation layers 6 and surfaces of the metal layers 5b exposed on the bottoms of the through-holes 61, and cover the inner surfaces (the side surfaces and the bottom surfaces) of the through-holes 61.

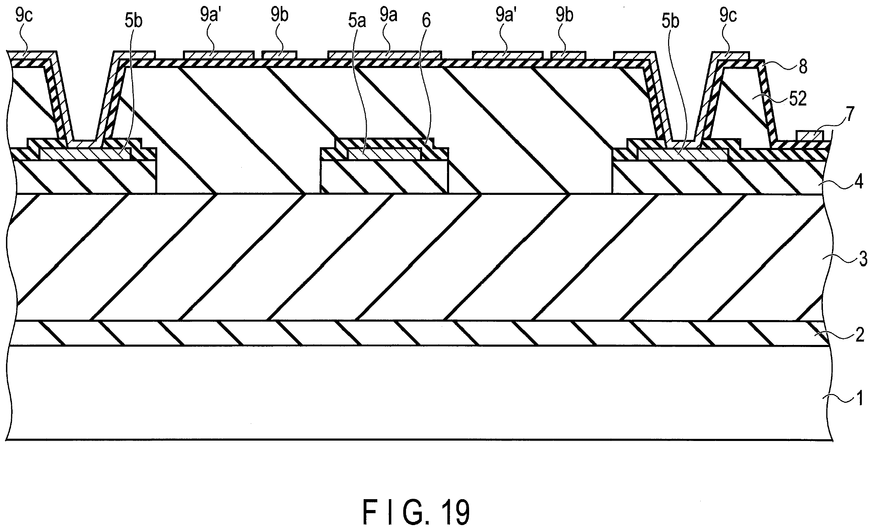

Next, the photolithography process and the etching process are used to process the conductive layer 9 illustrated in FIG. 18 to form the top electrodes 9a, the dummy electrodes 9a', the resistive temperature detectors 7 and 9b and the anchors 9c as illustrated in FIG. 19.

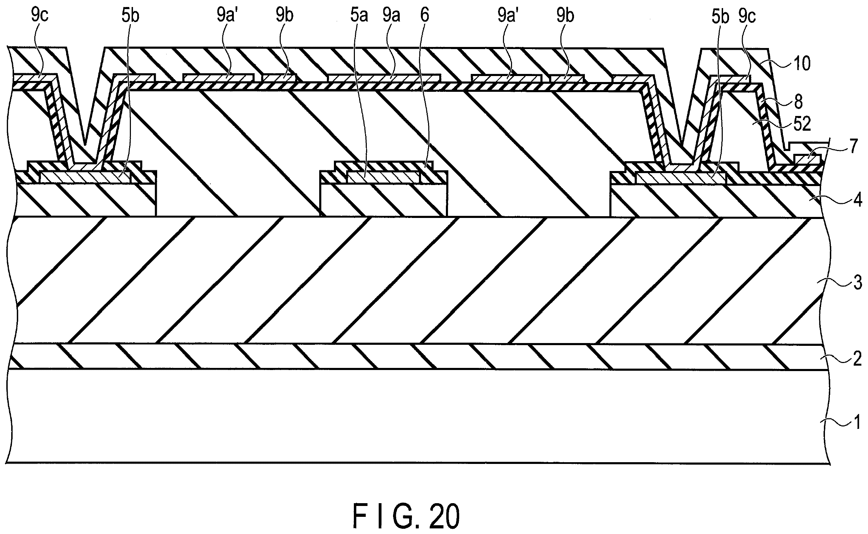

The insulation layer 10 to be process into the insulation layers 10a, 10b and 10c illustrated in FIG. 7 is formed on the entire surface as illustrated in FIG. 20.

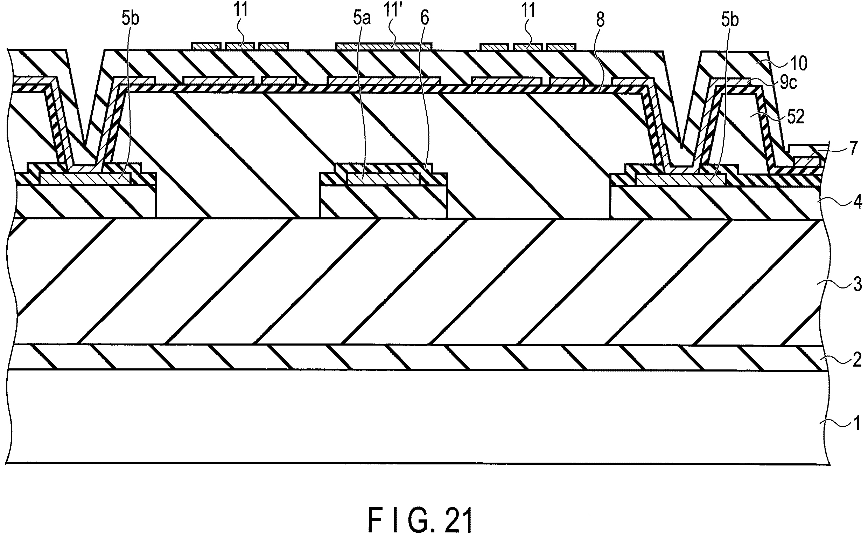

Next, as illustrated in FIG. 21, the heaters 11 and the conductive layer 11' are formed on the insulation layer 10. A process of forming the heaters 11 and the conductive layer 11' includes, for example, a process of forming a conductive layer (e.g., a TiN layer) to be processed into the heaters 11 and the conductive layer 11', and a process of patterning the conductive layer by using the photolithography process and the etching process.

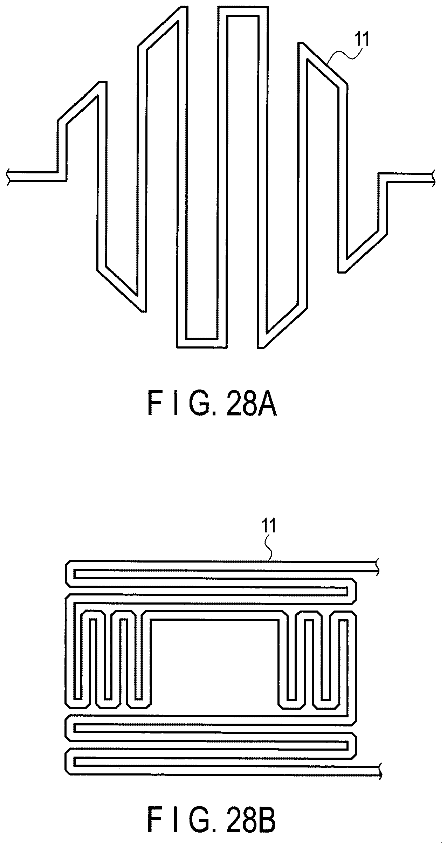

Note that, the heaters 11 seem to be divided in the cross section in FIG. 21, yet the heaters 11 are not actually divided. FIG. 28A illustrates an example of a planar pattern of the heater 11, and FIG. 28B illustrates another example of a planar pattern of the heater 11.

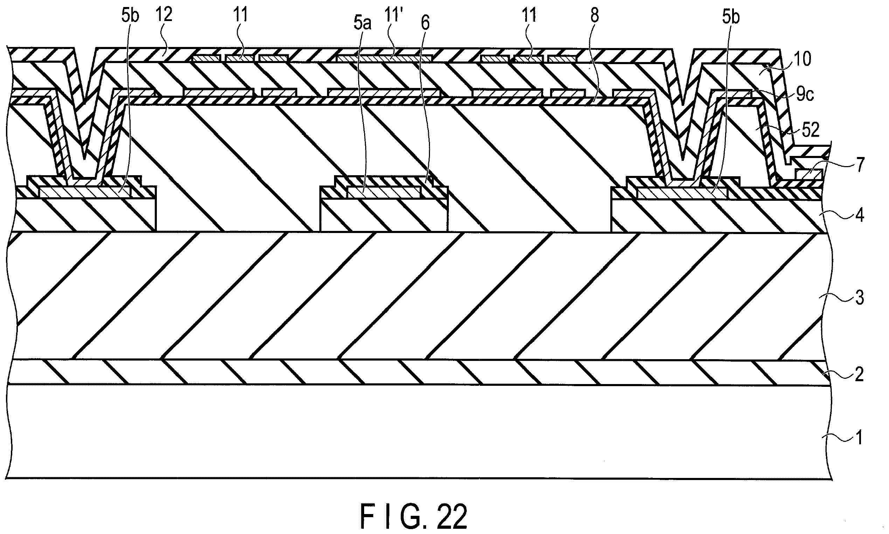

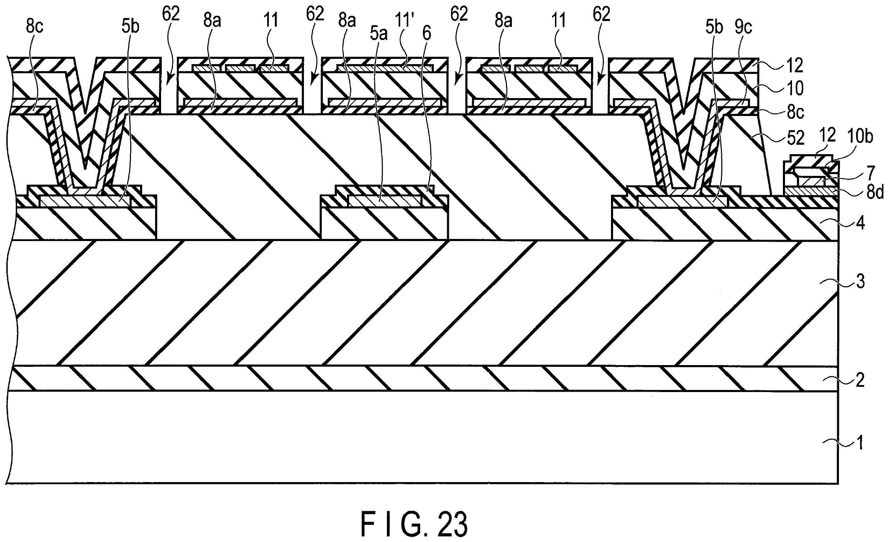

Next, as illustrated in FIG. 22, the insulation layer 12 is formed on the insulation layer 10 to cover the heaters 11 and the conductive layer 11'. Subsequently, the resist pattern (not illustrated) is formed on the insulation layer 12, and the insulation layer 12, the insulation layer 10 and the insulation layer 8 are etched by using the resist pattern as the mask to pattern the insulation layers 12, 10 and 8 as illustrated in FIG. 23, form through-holes 62 reaching the surface of the sacrificial layer 52 and form the passivation films 12, 10b and 8d of the resistive temperature detector 7.

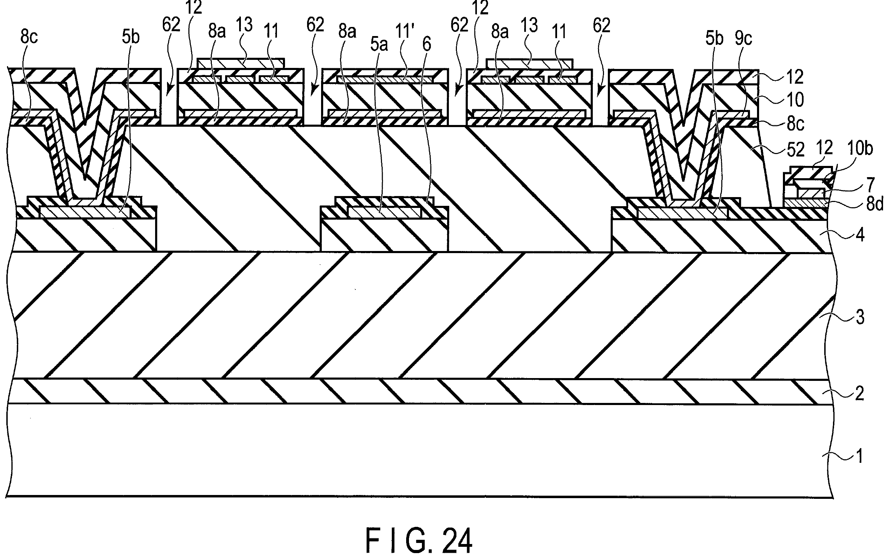

Next, as illustrated in FIG. 24, the hydrogen absorption layer 13 is formed on the insulation layer 12 at a portion which covers the heater 11, and then, for example, ashing (isotropic dry etching) which uses oxygen ($O_2$) is performed to remove the sacrificial layer 52 and remove part of the insulation layer 3, so that it is possible to obtain the hydrogen sensor illustrated in FIG. 7.

Note that, the entire sacrificial layer 52 cannot be removed by using anisotropic etching, and a part of the insulation layer 3 cannot be removed such that the lower cavity regions 22 shown in FIG. 1 can be formed.

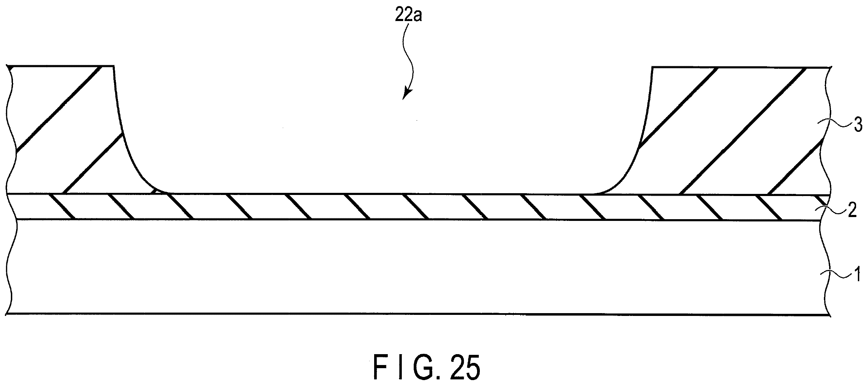

FIGS. 25 to 27 are cross-sectional views schematically illustrating a modified example of the lower cavity regions.

FIG. 25 illustrates one lower cavity region 22a corresponding to a configuration where the two lower cavity regions 22 in FIG. 7 are connected via a cavity.

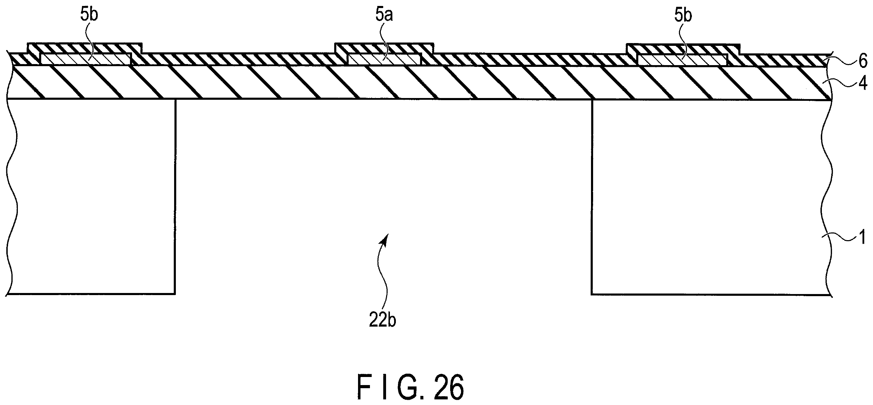

FIG. 26 illustrates a lower cavity region 22b defined by a through-hole (opening) provided in the silicon substrate 1. Air exists in the cavity region 22b. Air has a high heat resistance. When the insulation layers 4 and 6 are made thin, the lower cavity region 22b is connected to the upper cavity region (not illustrated) substantially in series, and the lower cavity region 22b functions similar to the cavity regions 22. In FIG. 26, the insulation layers 2 and 3 illustrated in FIG. 1 are not used. When there are not the insulation layers 2 and 3, the lower cavity region 22b can be easily formed.

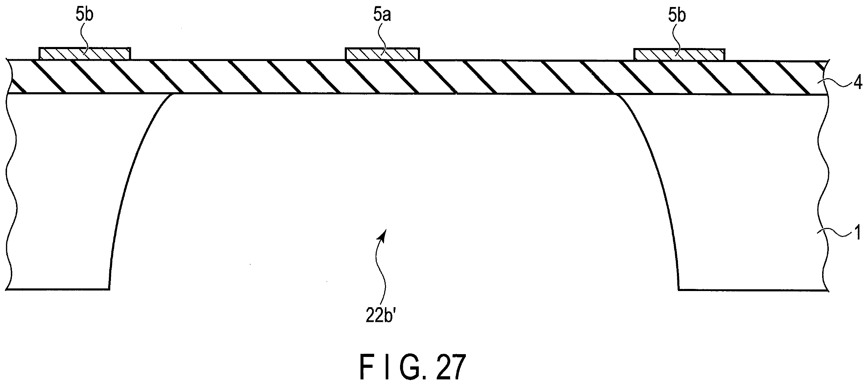

FIG. 26 illustrates the lower cavity region 22b having the shape formed by anisotropic etching. However, as illustrated in FIG. 27, a lower cavity region 22b' formed by isotropic etching may be used. FIG. 27 illustrates the cavity region 22b' whose side surface is a curved surface. However, this side surface has a linear surface in some cases and has a combination of the linear surface and the curved surface.

Note that, the above-described arrangement has described the hydrogen sensor. However, by using a absorption layer which absorbs another gas instead of the hydrogen absorption layer, another gas sensor can be also carried out likewise.

(Second Arrangement)

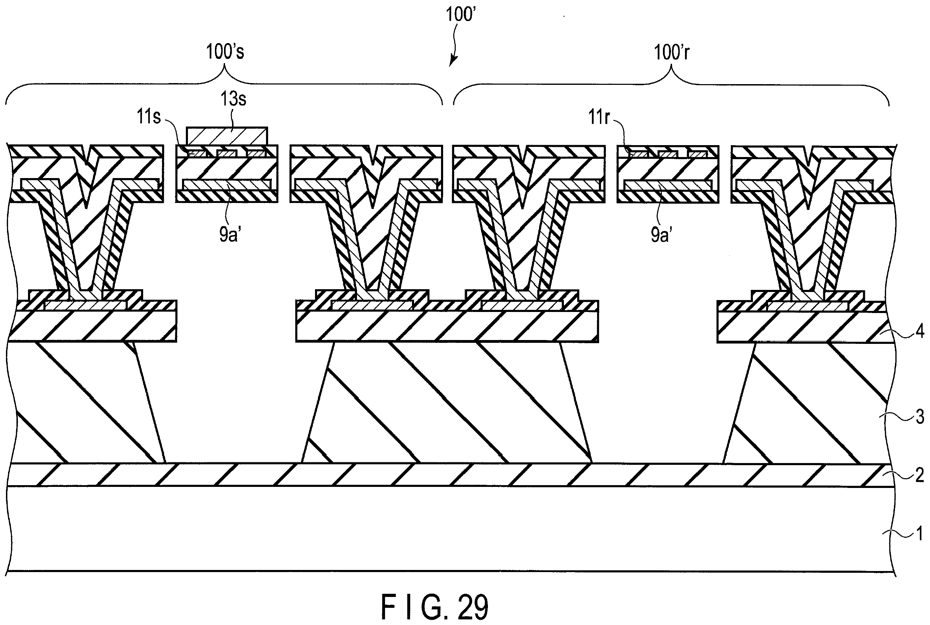

FIG. 29 is a cross-sectional view for explaining a hydrogen sensor 100' according to the second arrangement. The hydrogen sensor 100' is a catalytic combustion type combustible gas sensor. A combustible gas is, for example, hydrogen, methane, propane, butane or isobutane.

The hydrogen sensor 100' includes a sensor element 100's and a reference element 100'r. The sensor element 100's includes a dummy electrode 9a' and a resistor 11s as a heater, which are provided in a thermally insulated beam structure on a substrate 1, and a catalytic layer 13s provided on these components. A material of the catalytic layer 13s is, for example, Pd, PdCuSi, a Pd alloy, or Pt or Pt alloy. The reference element 100'r includes a resistor 11r as a heater provided in the thermally insulated beam structure.

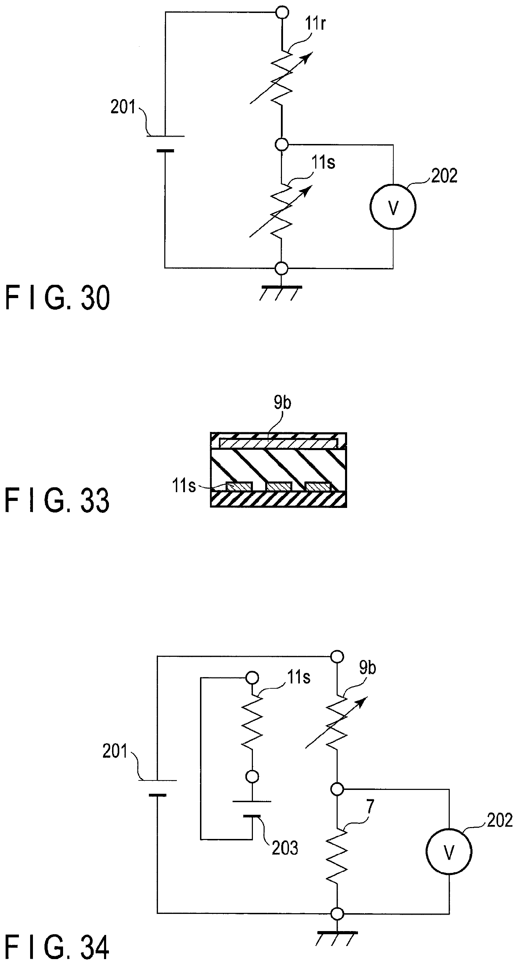

FIG. 30 illustrates an example of a detection circuit of the catalytic combustion type combustible gas sensor. The detection circuit uses a resistance bridge including the resistor 11s, the resistor 11r, a voltage source 201 and a voltage measurement circuit 202. In this regard, for example, two resistors are bridged, however the detection circuit may be bridged (wheat stone bridge) by four resistors.

When the voltage source 201 applies a voltage to the resistor 11s and the resistor 11r, the resistor 11s and the resistor 11r are heated to certain temperatures by Joule heat. The temperature is, for example, 100°C to 400°C.

In this regard, when a combustible gas exists, catalytic combustion of the combustible gas occurs in the catalytic layer 13s of the sensor element 100's, and the temperature rises. Meanwhile, the reference element 100'r does not have a catalytic material, and therefore does not cause catalytic combustion. Hence, only the sensor element 100's raises the temperature. The temperature rise raises a resistance value ($R_S$) of the resistor 11s. As a result, an output voltage ($V_{out}$) of the voltage measurement circuit 202, i.e., a sensor output increases. When a resistance value of the resistor 11r is $R_r$, and a voltage value of the voltage source 201 is $V_{brg}$, $V_{out}$ = $V_{brg}/\{(R_r/R_s) + 1\}$ holds. Consequently, it is possible to detect the combustible gas based on a change in the output voltage ($V_{out}$).

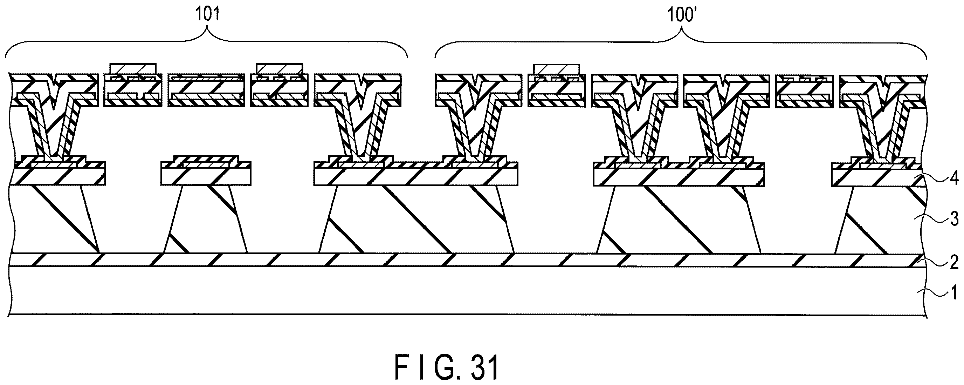

The hydrogen sensor 100' according to the present arrangement can be manufactured by using a manufacturing method which is the same as or is in accordance with a hydrogen sensor (capacitive hydrogen sensor) 100 according to the first arrangement described with reference to FIGS. 11 to 24. Consequently, it is possible to realize a sensor (multisensor) on which the hydrogen sensor 100' according to the present arrangement and the hydrogen sensor 100 according to the first arrangement are mounted on the same substrate 1 in a mixed manner as illustrated in FIG. 31.

The catalytic combustion type combustible gas sensor cannot generally specify a type of a combustible gas, yet the hydrogen sensor 100 of the multisensor illustrated in FIG. 31 can distinguish whether or not the combustible gas is hydrogen.

(Third Arrangement)

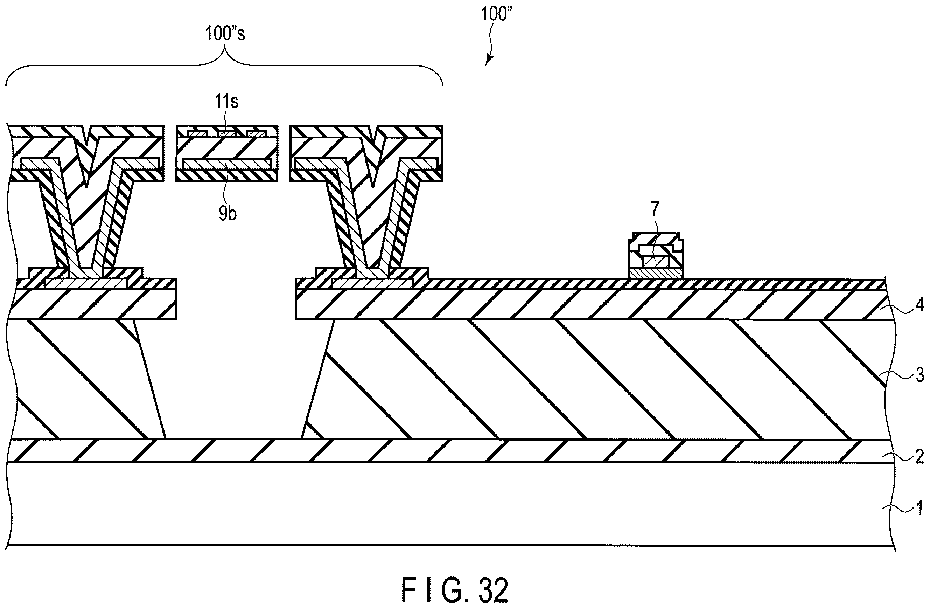

FIG. 32 is a cross-sectional view for explaining a hydrogen sensor 100" according to the third arrangement. The hydrogen sensor 100" is a thermal conductivity hydrogen sensor.

The hydrogen sensor 100" includes a sensor element 100"s and a resistive temperature detector 7. The sensor element 100"s includes a resistive temperature detector 9b and a resistor 11s provided in a thermally insulated beam structure on a substrate 1. In FIG. 32, the resistor 11s is disposed above the resistive temperature detector 9b. However, as illustrated in FIG. 33, an upper and lower relationship between the resistor 11s and the resistive temperature detector 9b may be reverse. The resistive temperature detector 7 is provided in a thermally insulated structure similar to the first arrangement.

FIG. 34 illustrates an example of a detection circuit of the thermal conductivity hydrogen sensor. FIG. 34 illustrates a power supply 203 which applies a voltage to the resistor 11s. The resistor 11s to which the voltage has been applied generates heat, and heats the resistive temperature detector 9b to a certain temperature (e.g., 100°C to 400°C). Meanwhile, the resistive temperature detector 7 is not heated. A hydrogen gas has a very high thermal conductivity compared to air or a nitrogen gas. Hence, the temperature of the resistive temperature detector 9b heated under an atmosphere in which a hydrogen gas exists is lower than the temperature of the resistive temperature detector 9b heated under an atmosphere in which a hydrogen gas such as air or a nitrogen gas atmosphere does not exist. As a result, when the hydrogen gas exists, an output voltage ($V_{out}$) of a voltage measurement circuit 202, i.e., a sensor output increases. When a resistance value of the resistive temperature detector 7 is $R_r$ and a resistance of the resistive temperature detector 9b is $R_s$, $V_{out} = V_{brg}/\{(R_r/R_s) + 1\}$ holds. Consequently, it is possible to detect hydrogen based on a change in a sensor output $V_{out}$. A decrease in the temperature due to heat dissipation is generally proportional to a gas concentration, so that it is possible to detect hydrogen compared to a high hydrogen concentration.

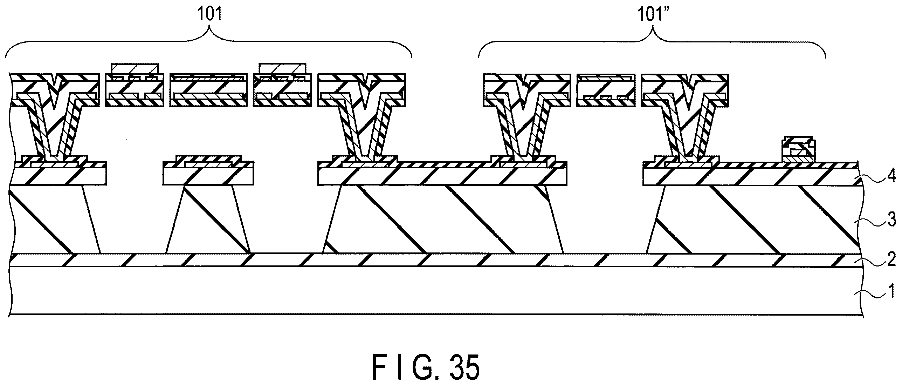

The hydrogen sensor 100'' according to the present arrangement can be manufactured by using a manufacturing method which is the same as or is in accordance with a hydrogen sensor (capacitive hydrogen sensor) 100 according to the first arrangement described with reference to FIGS. 11 to 24. Consequently, it is possible to realize a sensor (multisensor) on which the hydrogen sensor 100'' according to the present arrangement and the hydrogen sensor 100 according to the first arrangement are mounted on the same substrate 1 in a mixed manner as illustrated in FIG. 35.

The capacitive hydrogen sensor has high sensitivity in a region of a low hydrogen concentration in terms of characteristics of a hydrogen storage material, yet has low sensitivity in a region of a high hydrogen concentration. On the other hand, the thermal conductivity type hydrogen sensor has low sensitivity in a region of a low hydrogen concentration, yet has high sensitivity in a region of a high hydrogen concentration. Consequently, the multisensor illustrated in FIG. 35 can make up for drawbacks of both of two types of gas sensors.

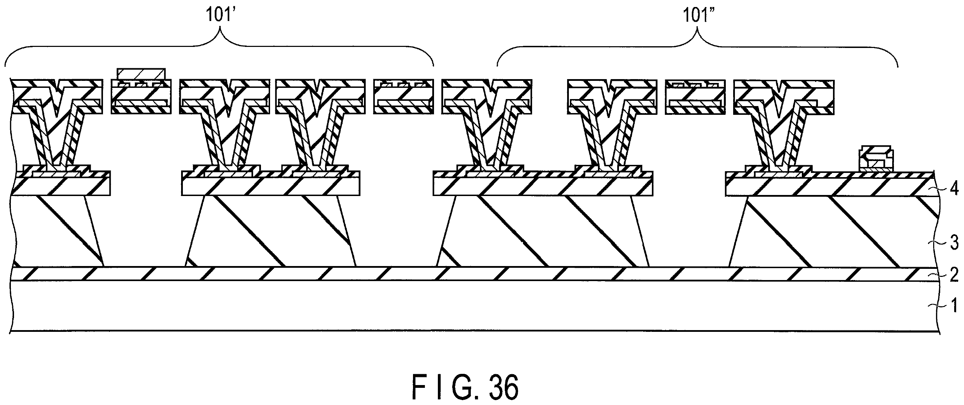

Furthermore, it is also possible to realize a sensor (multisensor) on which the hydrogen sensor 100, a hydrogen sensor 100' and the hydrogen sensor 100'' are mounted on the same substrate 1 in a mixed manner. This multisensor can be realized by, for example, disposing the hydrogen sensor 100'' as illustrated in FIG. 36 on a right side of the hydrogen sensor 100' of the multisensor illustrated in FIG. 31. Note that, an arrangement order of the hydrogen sensors 100, 100' and 100'' can be optionally changed. By using the multisensor in FIG. 36, it is possible to detect hydrogen of a low concentration to a high concentration, and detect a combustible gas such as methane other than a hydrogen gas.

Note that, the first arrangement has described an example of the single hydrogen sensor 100, however the single hydrogen sensor 100' or the single hydrogen sensor 100'' may be used. Furthermore, a multisensor which does not include the hydrogen sensor 100 yet includes the hydrogen sensors 100' and 100'' can be also realized.

While certain arrangements have been described, these arrangements have been presented by way of example only, and are not intended to limit the scope of the claims. Indeed, the gas sensors described herein may be embodied in a variety of other forms; furthermore various omissions, substitutions and changes in the form of the gas sensors described herein may be made.

The arrangements as described above include clauses below.

Clause 1
A gas sensor characterized by comprising:

a MEMS capacitor comprising a first electrode and a movable structure disposed apart from the first electrode, the movable structure including a deformable member configured to deform by absorption or adsorption of a predetermined gas, a heater configured to heat the deformable member, and a second electrode configured to change an interval to the first electrode in response to the deformation of the deformation member;
a gas concentration calculating unit configured to calculate a concentration of the predetermined gas based on the interval between the first electrode and the second electrode;
a first temperature sensor configured to detect a temperature of the heater;
a second temperature sensor configured to detect a temperature of environment in which the MEMS capacitor is used; and
a temperature control unit configured to control a temperature of the heater based on the temperature of the heater detected by the first temperature sensor and the temperature of the environment detected by the second temperature sensor.

Clause 2
The gas sensor according to Clause 1, characterized in that
the first temperature sensor comprises a first member configured to change electric characteristics in response to a change in the temperature of the heater, and a first measurement unit configured to measure the electric characteristics of the first member, and

the second temperature sensor comprises a second member configured to change electric characteristics in response to a change in the temperature of the environment in which the MEMS capacitor is used, and a second measurement unit configured to measure the electric characteristics of the second member.

Clause 3

The gas sensor according to Clause 2, characterized in that

the electric characteristics of the first and second members are electric resistances,

the first measurement unit measures a first resistance value of the first member in a state where a current flows through the first member, and

the second measurement unit measures a second resistance value of the second member in a state where a current flows through the second member.

Clause 4

The gas sensor according to Clause 2 or 3, characterized by further comprising:

a first temperature calculating unit configured to calculate the temperature of the heater by using the measured first resistance value; and
a second temperature calculating unit configured to calculate the temperature of the environment by using the measured second resistance value.

Clause 5

The gas sensor according to Clause 3 or 4, characterized in that

the first member includes a first resistive temperature detector, and

the second member includes a second resistive temperature detector.

Clause 6

The gas sensor according to any one of Clauses 2 to 5, characterized in that the first member is provided in the MEMS capacitor.

Clause 7

The gas sensor according to Clause 6, characterized in that the first member is disposed below the heater.

Clause 8

The gas sensor according to Clause 7, characterized in that an insulation layer is provided between the first member and the heater.

Clause 9

The gas sensor according to any one of Clauses 1 to 8, characterized in that the temperature control unit is configured to control the temperature of the heater based on the temperature of the environment detected by the second temperature sensor such that the temperature of the heater is to be within a predetermined temperature range or is a predetermined temperature.

Clause 10

The gas sensor according to Clause 9, characterized in that the temperature control unit is configured to control the temperature of the heater by controlling a current flowing through the heater.

Clause 11

The gas sensor according to Clause 10, characterized by further comprising a variable current source configured to supply a current to the heater,

wherein the temperature control unit includes

a first circuit configured to determine a magnitude of current that is supplied to the heater, based on the temperature of the environment detected by the second temperature sensor, the current being necessary in order that the temperature of the heater detected by the first temperature sensor is to be within the predetermined temperature range or is the predetermined temperature, and

a second circuit configured to control the variable current source such that the current of the magnitude determined by the first circuit is supplied to the heater.

Clause 12

The gas sensor according to any one of Clauses 2 to 11, characterized in that the MEMS capacitor, the first member and the second member are mounted on an identical substrate.

Clause 13

The gas sensor according to any one of Clauses 1 to 12, characterized in that the MEMS capacitor includes

a substrate region,

a first cavity region provided between the first electrode and the movable structure, and

a second cavity region provided on the substrate region and communicating with the first cavity region.

Clause 14

The gas sensor according to Clause 13, characterized in that

the substrate region includes a semiconductor substrate and a first insulation layer provided on the semiconductor substrate, and

the second cavity region is provided in the first insulation layer.

Clause 15

The gas sensor according to Clause 14, characterized in that the first insulation layer includes a side surface that defines the second cavity region and has a tapered shape.

Clause 16.

The gas sensor according to Clause 14 or 15, characterized by further comprising a second insulation layer provided on the first insulation layer,

wherein an opening is provided in the second insulating layer, and the first concave region and the second concave region communicate each other through the opening.

Clause 17

The gas sensor according to any one of Clauses 1 to 16, characterized in that the predetermined gas contains hydrogen.

Clause 18

The gas sensor according to any one of Clauses 1 to 17, characterized by further comprising at least one of a catalytic combustion type gas sensor and a thermal conductivity type hydrogen sensor.

Clause 19

The gas sensor according to Clause 18, characterized in that

the thermal conductivity type hydrogen sensor includes

a heater provided on a substrate, and

a member disposed above or below the heater with reference to the substrate, and configured to change electric characteristics in response to a change in a temperature or a change in a composition of an atmospheric gas, and

the heater and the member are provided in a beam structure on the substrate.

Clause 20

The gas sensor according to Clause 19, characterized in that the change in the composition of the atmospheric gas is a change in a concentration of hydrogen in air.

**Claims**

1. A gas sensor **characterized by** comprising:

   a MEMS capacitor (101) comprising a first electrode (5a) and a movable structure (30) disposed apart from the first electrode, the movable structure including a deformable member (13) configured to deform by absorption or adsorption of a predetermined gas, a heater (11) configured to heat the deformable member, and a second electrode (9a) configured to change an interval to the first electrode in response to the deformation of the deformation member;
   a gas concentration calculating unit (102) configured to calculate a concentration of the predetermined gas based on the interval between the first electrode and the second electrode;
   a first temperature sensor (103) configured to detect a temperature of the heater;
   a second temperature sensor (104) configured to detect a temperature of environment in which the MEMS capacitor is used; and
   a temperature control unit (105) configured to control a temperature of the heater based on the temperature of the heater detected by the first temperature sensor and the temperature of the environment detected by the second temperature sensor.

2. The gas sensor according to Claim 1, **characterized in that**
   the first temperature sensor comprises a first member (9b) configured to change electric characteristics in response to a change in the temperature of the heater, and a first measurement unit (121) configured to measure the electric characteristics of the first member, and
   the second temperature sensor comprises a second member (7) configured to change electric characteristics in response to a change in the temperature of the environment in which the MEMS capacitor is used, and a second measurement unit (122) configured to measure the electric characteristics of the second member.

3. The gas sensor according to Claim 2, **characterized in that**
   the electric characteristics of the first and second members are electric resistances,
   the first measurement unit measures a first resistance value of the first member in a state where a current flows through the first member, and
   the second measurement unit measures a second resistance value of the second member in a state where a current flows through the second member.

4. The gas sensor according to Claim 3, **characterized by** further comprising:

   a first temperature calculating unit (110) configured to calculate the temperature of the heater by using the measured first resistance value; and
   a second temperature calculating unit (112) configured to calculate the temperature of the environment by using the measured second resistance value.

5. The gas sensor according to Claim 3 or 4, **characterized in that**
   the first member includes a first resistive temperature detector (9b), and
   the second member includes a second resistive temperature detector (7).

6. The gas sensor according to any one of Claims 2 to 5, **characterized in that** the first member is provided in the MEMS capacitor.

7. The gas sensor according to Claim 6, **characterized in that** the first member is disposed below the heater.

8. The gas sensor according to any one of Claims 1 to 7, **characterized in that** the temperature control unit is configured to control the temperature of the heater based on the temperature of the environment detected by the second temperature sensor such that the temperature of the heater is to be within a predetermined temperature range or is a predetermined temperature.

9.    The gas sensor according to Claim 8, **characterized in that** the temperature control unit is configured to control the temperature of the heater by controlling a current flowing through the heater.

10.    The gas sensor according to Claim 9, **characterized by** further comprising a variable current source (106) configured to supply a current to the heater, wherein the temperature control unit includes a first circuit (107) configured to determine a magnitude of current that is supplied to the heater, based on the temperature of the environment detected by the second temperature sensor, the current being necessary in order that the temperature of the heater detected by the first temperature sensor is to be within the predetermined temperature range or is the predetermined temperature, and a second circuit (108) configured to control the variable current source such that the current of the magnitude determined by the first circuit is supplied to the heater.

11.    The gas sensor according to any one of Claims 2 to 10, **characterized in that** the MEMS capacitor, the first member and the second member are mounted on an identical substrate.

12.    The gas sensor according to any one of Claims 1 to 11, **characterized in that** the MEMS capacitor includes a substrate region (1, 2, 3, 4), a first cavity region (21) provided between the first electrode and the movable structure, and a second cavity region (22) provided on the substrate region and communicating with the first cavity region.

13.    The gas sensor according to Claim 12, **characterized in that** the substrate region includes a semiconductor substrate (1) and a first insulation layer (3) provided on the semiconductor substrate, and the second cavity region is provided in the first insulation layer.

14.    The gas sensor according to any one of Claims 1 to 13, **characterized by** further comprising at least one of a catalytic combustion type gas sensor (100') and a thermal conductivity type hydrogen sensor (100'').

15.    The gas sensor according to Claim 14, **characterized in that**
the thermal conductivity type hydrogen sensor includes
a heater (11s) provided on a substrate (1), and
a member (9b) disposed above or below the heater with reference to the substrate, and configured to change electric characteristics in response to a change in a temperature or a change in a composition of an atmospheric gas, and
the heater and the member are provided in a beam structure on the substrate.

F I G. 1

103

Heater temperature sensor

I2

109

Constant
current source

9b

Resistive
temperature detector

110

Heater temperature
detection circuit

→ S_T1

F I G. 2A

110

Heater temperature detection circuit

121

Resistance
measurement circuit

S_R1

131

Heater temperature
calculation circuit

→ S_T1

F I G. 2B

104

Environmental temperature sensor

I3       111

Constant
current source

7

Resistive
temperature detector

112

Environmental temperature
detection circuit

→ $S_{T2}$

F I G. 3A

112

Environmental temperature detection circuit

122

Resistance
measurement circuit

$S_{R2}$

132

Environmental temperature
calculation circuit

→ $S_{T1}$

F I G. 3B

F I G. 4

EP 3 534 154 A1

```
                          ┌─────────────┐
                          │    Start    │
                          └──────┬──────┘
                                 │              S1
                    ┌────────────▼─────────────┐
                    │ Obtain heater temperature T1 │
                    │ and environmental temperature T2 │
                    └────────────┬─────────────┘
                                 │              S2
                    ┌────────────▼─────────────┐
                    │     Calculate necessary     │
                    │ temperature rise range (ΔT) │
                    └────────────┬─────────────┘
                                 │              S3
                    ┌────────────▼─────────────┐
                    │   Calculate heater-current,  │
                    │ and supply calculated heater current │
                    └────────────┬─────────────┘
                                 │              S4
                    ┌────────────▼─────────────┐
                    │ Obtain heater temperature T1 │
                    └────────────┬─────────────┘
                                 │
                                 │              S5
               No       ╱◄───────▼────────╲
          ┌────────────◄  Is T1 within predetermined  ╲
          │             ╲       range?        ╱
          │              ╲────────┬──────────╱
          │                       │ Yes
          │                ┌──────▼──────┐
          │                │     End     │
          │                └─────────────┘
```

F I G. 5

100

101

MEMS capacitor

Movable structure 30

Hydrogen absorption layer 13

Heater 11

Top electrode 9a

Bottom electrode 5a

I1

106 Variable current source

$S_{CTL}$

105 Heater-temperature control unit

$S_{T1}$

103 Heater-temperature sensor

9b Resistance temperature detector

$S_{T2}$

104 Environmental temperature sensor

$S_C$

102 Hydrogen concentration calculation circuit

F I G. 6

FIG. 7

F I G. 8

EP 3 534 154 A1

| TiN | ⟩~9a |
|-----|------|
| SiN | ~9a2 |
| TiN | ~9a1 |

F I G. 9A

| PdCuSi | ~30a4 |
|--------|-------|
| TiN | ~30a3 |
| SiN | ~30a2 |
| TiN | ~30a1 |

F I G. 9B

| SiN | ~14a1 |
|-----|-------|

F I G. 9C

| SiN | ~100b2 |
|-----|--------|
| TiN | ~100b1 |

F I G. 9D

| TiN | ~200a3 |
|-----|--------|
| SiN | ~200a2 |
| TiN | ~200a1 |

F I G. 9E

F I G. 10

EP 3 534 154 A1

F I G. 11

EP 3 534 154 A1

EP 3 534 154 A1

FIG. 12

F I G. 13

EP 3 534 154 A1

F I G. 14

EP 3 534 154 A1

F I G. 15

EP 3 534 154 A1

F I G. 16

EP 3 534 154 A1

F I G. 17

EP 3 534 154 A1

EP 3 534 154 A1

F I G. 18

FIG. 19

F I G. 20

EP 3 534 154 A1

FIG.21

F I G. 22

EP 3 534 154 A1

F I G. 23

F I G. 24

EP 3 534 154 A1

F I G. 25

EP 3 534 154 A1

F I G. 26

F I G. 27

EP 3 534 154 A1

F I G. 28A

F I G. 28B

F I G. 29

EP 3 534 154 A1

F I G. 30

F I G. 33

F I G. 34

F I G. 31

F I G. 32

EP 3 534 154 A1

FIG. 35

F I G. 36

Europäisches
Patentamt

European
Patent Office

Office européen
des brevets

## EUROPEAN SEARCH REPORT

Application Number

EP 18 19 3403

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2017/343522 A1 (IKEHASHI TAMIO [JP] ET AL) 30 November 2017 (2017-11-30) * the whole document * | 1-15 | INV. G01N27/22 |
| Y | US 2012/197554 A1 (GLAUDEL STEPHEN P [US] ET AL) 2 August 2012 (2012-08-02) * the whole document * | 1-15 | |
| Y | GB 2 533 294 A (CAMBRIDGE CMOS SENSORS LTD [GB]) 22 June 2016 (2016-06-22) * the whole document * | 1-15 | |

TECHNICAL FIELDS
SEARCHED      (IPC)

G01N

The present search report has been drawn up for all claims

| Place of search | Date of completion of the search | Examiner |
|---|---|---|
| Munich | 14 January 2019 | De Masi, Rita |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 19 3403

This annex lists the patent family members relating to the patent documents cited in the above-mentioned European search report.
The members are as contained in the European Patent Office EDP file on
The European Patent Office is in no way liable for these particulars which are merely given for the purpose of information.

14-01-2019

| Patent document cited in search report | | Publication date | Patent family member(s) | | Publication date |
|---|---|---|---|---|---|
| US 2017343522 | A1 | 30-11-2017 | JP 2017215170 A<br>US 2017343522 A1 | | 07-12-2017<br>30-11-2017 |
| US 2012197554 | A1 | 02-08-2012 | US 2012197554 A1<br>WO 2012079091 A2 | | 02-08-2012<br>14-06-2012 |
| GB 2533294 | A | 22-06-2016 | NONE | | |

EPO FORM P0459

For more details about this annex : see Official Journal of the European Patent Office, No. 12/82